(19) Europäisches Patentamt
European Patent Office
Office européen des brevets

(11) EP 0 493 263 B2

(12) NOUVEAU FASCICULE DE BREVET EUROPEEN

(45) Date de publication et mention de la décision concernant l'opposition:
**05.11.1997 Bulletin 1997/45**

(45) Mention de la délivrance du brevet:
**17.11.1994 Bulletin 1994/46**

(51) Int Cl.6: **C09C 1/30**, D21H 17/68, D21H 19/40

(21) Numéro de dépôt: **91403553.0**

(22) Date de dépôt: **27.12.1991**

(54) **Nouvelles silices, leur procédé de préparation et leur utilisation comme charges notamment pour papiers**

Neue Kieselsäuren, Verfahren zu ihrer Produktion sowie ihre Benutzung als Füllstoffe, besonders für Papier

New silicas their proparation process and their use as fillers especially for paper

(84) Etats contractants désignés:
**AT CH DE ES FR GB IT LI NL SE**

(30) Priorité: **28.12.1990 FR 9016420**

(43) Date de publication de la demande:
**01.07.1992 Bulletin 1992/27**

(73) Titulaire: **RHONE-POULENC CHIMIE**
**92408 Courbevoie Cédex (FR)**

(72) Inventeur: **Persello, Jacques**
**F-01120 Montluel (FR)**

(74) Mandataire: **Dubruc, Philippe et al**
**RHONE-POULENC CHIMIE,**
**Direction de la Propriété Industrielle,**
**25, Quai Paul Doumer**
**92408 Courbevoie Cédex (FR)**

(56) Documents cités:
EP-A- 0 033 843     EP-A- 0 046 057
EP-A- 0 089 810     EP-A- 0 122 781
EP-A- 0 168 215     EP-A- 0 345 116
WO-A-81/03642       DE-C- 879 834
FR-A- 2 303 763     US-A- 3 963 512
US-A- 4 029 513     US-A- 4 260 454
US-A- 4 595 578

## Description

La présente invention concerne principalement de nouvelles silices à chimie de surface améliorée, un procédé pour leur obtention, et leur application comme charges, notamment pour papiers.

Elle concerne également, de manière incidente, certaines suspensions de silices.

Plus précisément encore, l'invention concerne des silices à rétention chimique d'une part, et à capacité d'adsorption, notamment vis à vis des encres pour papier, d'autre part, particulièrement élevées.

On sait que les silices peuvent être utilisées de façon avantageuse dans la fabrication du papier, soit comme charge de masse pour des papiers courants type papiers journaux, soit comme charge de couchage pour des papiers spéciaux réclamant une plus haute qualité de surface, tels que par exemple les papiers pour imprimantes à jet d'encre couleur.

Incorporées dans la masse du papier, les silices permettent d'améliorer significativement l'une ou plusieurs des propriétés suivantes : opacité, blancheur, densité, porosité, propriétés mécaniques, imprimabilité, etc...

Certains papiers, dits papiers spéciaux, doivent en outre présenter une très grande qualité de surface. C'est le cas par exemple des papiers pour imprimantes à jet d'encre couleur, auxquels on demande qu'ils permettent une reproduction couleur de grande définition. Cet état de surface peut alors être obtenu par couchage (enduction) des feuilles de papiers par des bains de couchage à base de silice.

On sait que les améliorations des propriétés soit de masse soit de surface ainsi recherchées pour les papiers sont liées aux caractéristiques physiques de structure et de morphologie des silices utilisées. Ces caractéristiques sont notamment la surface spécifique, la taille et le volume de pores, la tailles des agrégats et des agglomérats, qui doivent donc être convenablement ajustées selon le résultat visé.

Bien que les silices mises au point à ce jour conviennent sur bien des points pour une application en papeterie, elles présentent encore néanmoins certains inconvénients.

Ainsi, par exemple, les silices actuellement utilisées comme charge de masse présentent une rétention chimique qui peut paraître insuffisante. La rétention chimique quantifie l'aptitude de la silice à être retenue par adsoption sur les fibres de cellulose du papier; elle est définie, dans cette application, comme le rapport de la quantité de silice effectivement adsorbée sur les fibres celluloses à la quantité totale de silice utilisée lors de l'incorporation en masse. Cette faiblesse dans la rétention chimique nuit à l'économie du procédé, pose des problèmes de pollution et de recyclage des effluents, et diminue les propriétés finales du papier. Par ailleurs, les silices actuellement utilisées comme charge de couchage ne présentent pas une qualité suffisante pour permettre d'une part un contrôle rigoureux de la pénétration superficielle des encres, et d'autre part une adsorption rapide de celles-ci, deux conditions pourtant indispensables pour obtenir une reproduction dite à grande définition.

Un objet de la présente invention est donc de proposer de nouvelles silices à rétention chimique et capacité d'adsorption, notamment vis à vis des encres, améliorées et donc parfaitement utilisables comme charges dans les formulations papetières.

Un autre objet de l'invention est un procédé permettant la préparation de telles silices.

Or, il a été trouvé par la Demanderesse que certaines des propriétés recherchées pour les charges de masse ou les charges de couchage pour papiers dépendaient non seulement des caractéristiques structurelles des silices utilisées, mais également de leur chimie de surface. En particulier, il a été trouvé que le contrôle de cette chimie de surface permettait d'influencer avantageusement des propriétés comme la rétention chimique et la capacité d'adsorption.

Cette découverte est à la base de la présente invention.

On a pu ainsi établir un certain nombre de conditions sur la surface des silices, notamment au niveau du nombre et de la nature des sites de surface (cationiques ou anioniques) pour que celles-ci présentent, par rapport à des silices de l'art antérieur de structures pourtant équivalentes, les propriétés améliorées susmentionnées. On a pu également mettre au point un procédé de traitement de surface de silices permettant d'accéder de manière simple aux nouvelles silices selon l'invention.

Les silices selon l'invention, utilisables notamment comme charges, sont des Silices précipitées caractérisées en ce qu'elles présentent une chimie de surface telle que leur nombre de sites cationiques, exprimé en microMole/m$^2$ de silice, soit supérieur à 0,05 et en ce qu'elles contiennent au moins un élément métallique au moins divalent chimiquement lié à leur surface, choisi dans le groupe comprenant les alcalinoterreux, le titane, le zirconium, et l'aluminium.

D'autre part, le procédé de préparation des silices précipitées selon l'invention, qui se ramène essentiellement à un procédé de traitement de surface de silices, est caractérisé en ce qu'il consiste (a) à faire subir à une suspension de silice présentant un pH d'au plus 8, un traitement avec un sel organique ou inorganique d'un élément métallique au moins divalent précité, (b) puis, à l'issue de ce traitement, à remonter le pH du milieu réactionnel à une valeur supérieure ou égale à 3,5, (c) à séparer ensuite la silice dudit milieu, et (d) à enfin sécher la silice obtenue.

L'invention concerne également les silices obtenues ou susceptibles d'être obtenues par ce procédé.

Elle concerne aussi des suspensions de silice qui peuvent être soit préparées directement à partir des silices selon l'invention soit obtenues lors de la mise en oeuvre d'un procédé tel que ci-dessus, ces suspensions présentant la propriété remarquable d'être particulièrement stables dans le temps.

Enfin, l'invention concerne l'utilisation des silices telles que décrites ci-dessus ou préparées selon le procédé qui vient d'être mentionné plus haut, comme charges pour papiers.

Mais d'autres caractéristiques, aspects et avantages de l'invention apparaîtront encore plus clairement à la lecture de la description qui va suivre, et des exemples concrets mais non limitatifs destinés à l'illustrer.

Comme cela été indiqué en introduction, des caractéristiques essentielles des silices précipitées de l'invention résident dans leur chimie de surface. Plus précisément, un des aspects à prendre en compte dans cette chimie de surface est le nombre et la nature des sites de surface, et plus particulièrement le nombre de sites cationiques ainsi que l'élément métallique au moins divalent chimiquement lié à la surface choisi dans le groupe comprenant les alcalino-terreux, le titane, le zirconium et l'aluminium.

Ce nombre se mesure en microMole de sites cationiques par $m^2$ de silice.

En pratique, cette mesure se fait de la manière suivante :

le nombre de sites cationiques est déterminé par la quantité de surfactant anionique, utilisé comme molécule sonde, fixé par adsorption spécifique sur une silice. L'adsorption est effectuée à un pH constant de 6,5 et pour une concentration en silice exprimée en surface ($m^2$) telle que le rapport de concentrations entre le surfactant adsorbé sur la silice et le surfactant en équilibre est égal à 1. Le nombre de sites est exprimé en microMole de sites pour 1 $m^2$ de silice.

La mesure du nombre de sites est effectuée en deux ou plusieurs étapes. Dans un premier temps, on détermine un nombre approximatif de sites. Dans un deuxième temps, la quantité exacte de sites est déterminée en effectuant la mesure pour un rapport de concentrations entre le surfactant adsorbé sur la silice et le surfactant en équilibre égal à 1.

1.1. <u>Détermination du nombre approximatif de sites cationiques.</u>

Une quantité $m_1$ (g) de silice, préalablement séchée à 120°C pendant 4 heures, est dispersée dans 50 g d'une solution aqueuse de Dioctylsulfosuccinate de sodium (DDS) à 10,00 µM/g. Le pH de la suspension est ajusté à 6,50 par ajout de solutions 0,10 M/l d'acide sulfurique ou d'hydroxyde de sodium. La masse $m_1$ de silice est déterminée par la relation suivante :

$m_1 = (30/S)$, où S est la surface spécifique de la silice en $m^2$/g déterminée par la méthode BET et correspondant à la surface développée par les pores supérieurs à 1,3 nm.

La suspension ainsi constituée est agitée pendant 4 heures à 25°C. On centrifuge par la suite la suspension à 7500 t/mn pendant 60 mn et le surnageant obtenu est filtré sur filtre millipore de 0,22 µm. Une solution E1 est obtenue par ajout de 10,000 g de surnageant filtré dans 90,00 g d'eau bidistillée.

De la même façon. une solution témoin R1 est obtenue par ajout de 5,000 g de solution de Dioctylsulfosuccinate de sodium à 10 µM/g dans 95,00 g d'eau bidistillée.

Le surfactant anionique est dosé par turbitimétrie par addition d'une solution aqueuse de 1,5-dimethyl-1,5-diazaundecamethylene polymethobromide (PB) à 5 µM/g. Les turbidités des solutions E1 et R1 sont mesurées à 550 nm en fonction du volume de PB versé. Le point équivalent est déterminé par la quantité de PB versé correspondant au maximum de turbidité. Soient $V_{E1}$ et $V_{R1}$ les volumes de PB versés dans le cas des solutions E1 et R1 respectivement.

La quantité de DDS adsorbé sur la silice est déterminée par la relation suivante :

$$Q_c = [500-(250.V_{E1}/V_{R1})]/30 \text{ (en } \mu\text{Mole/m}^2)$$

1.2. <u>Détermination du nombre exacte de sites cationiques.</u>

Une quantité m (g) de silice, préalablement séchée à 120°C pendant 4 heures, est dispersée dans 50 g d'une solution aqueuse de Dioctylsulfosuccinate de sodium (DDS) à 10,00 µM/g. Le pH de la suspension est ajusté à 6,50 par ajout de solutions 0,10 M/l d'acide sulfurique ou d'hydroxyde de sodium.

La masse m de silice est déterminée par la relation suivante :

$$m = \frac{250}{Q_C.S}$$

La suspension ainsi constituée est agitée pendant 4 heures à 25°C. On centrifuge par la suite la suspension à 7500 t/mn pendant 60 mn et le surnageant obtenu est filtré sur filtre millipore de 0,22 µm.

Une solution E est obtenue par ajout de 10,000 g de surnageant filtré dans 90,00 g d'eau bidistillée.

De la même façon, une solution témoin R est obtenue par ajout de 5,000 g de solution de Dioctylsulfosuccinate de sodium à 10 µM/g dans 95,00 g d'eau bidistillée.

Le surfactant anionique est dosé par turbitimétrie par addition d'une solution aqueuse de 1,5-dimethyl-1,5-diazaundecamethylene polymethobromide (PB) à 5 µM/g. Les turbidités des solution E et R sont mesurées à 550 nm en fonction du volume de PB versé. Le point équivalent est déterminé par la quantité de PB versé correspondant au maximum de turbidité. Soient $V_E$ et $V_R$ les volumes de PB versés dans le cas des solutions E et R respectivement.

Le nombre de sites cationiques (en µMole/m$^2$) est déterminé par la relation suivante :

$$N_C = [500-(250.V_E/V_R)]/m$$

Dans le cas présent, et comme déja indiqué, les silices selon l'invention présentent un nombre de sites cationiques supérieur à 0,05.

Selon un mode préféré de réalisation de l'invention, ce nombre est au moins de 0,1 et encore plus préférentiellement d'au moins 0,2, et notamment compris entre 0,2 et 60.

Les silices selon l'invention peuvent également présenter un certain nombre de sites anioniques distribués à leur surface. Ce nombre se mesure en microMoles de sites anioniques par m$^2$ de silice.

En pratique, cette mesure se fait de la manière suivante :

le nombre de sites anioniques est déterminé par la quantité de polyélectrolyte cationique, utilisé comme molécule sonde, fixé par adsoption spécifique sur une silice.

2.1. Détermination du nombre approximatif de sites anioniques.

Une masse $m_1$ de silice préalablement séchée à 120°C pendant 4 heures, est dispersée dans 50 g d'une solution aqueuse à 5,00 µM/g de 1,5-dimethyl-1,5-diazaundecamethylene polymethobromide (PB). Le pH de la suspension est ajusté à 8,5 par ajout d'acide sulfurique ou d'hydroxyde de sodium 0,1000 Mole/l.

La masse $m_1$ de silice est déterminée par la relation suivante :

$m_1 = (15/S)$, où S est la surface spécifique de la silice en m$^2$/g déterminée par la méthode BET et correspondant à la surface développée par les pores supérieurs à 1,3 nm.

La suspension ainsi constituée est agitée pendant 4 heures à 25°C.

On centrifuge par la suite la suspension à 7500 t/mn pendant 60 mn et le surnageant obtenu est filtré sur filtre millipore de 0,22 µm.

Une solution E1 est obtenue par ajout de 10,000 g de surnageant filtré dans 90,00 g d'eau bidistillée.

De la même façon, une solution témoin R1 est obtenue par ajout de 5,000 g de solution de 1,5-dimethyl-1,5-diazaundecamethylene polymethobromide à 5,00 µM/g dans 95,00 g d'eau bidistillée.

Le polyelectrolyte cationique est dosé par turbitimétrie par addition d'une solution aqueuse de Dioctylsulfosuccinate de sodium (DDS) à 10 µM/g. Les turbidités des solutions E1 et R1 sont mesurées à 550 nm en fonction du volume de DDS versé. Le point équivalent est déterminé par la quantité de DDS versé correspondant au maximum de turbidité. Soient $V_{E1}$ et $V_{R1}$ les volumes de DDS versés dans le cas des solutions E1 et R1 respectivement. La quantité de PB adsorbé sur la silice est déterminée par la relation suivante :

$$Q_A = [250-(125.V_{E1}/V_{R1})]/15 \text{ (en µMole/m}^2)$$

2.2. Détermination du nombre exact de sites anioniques.

Une masse m de silice préalablement séchée à 120°C pendant 4 heures, est dispersée dans 50 g d'une solution aqueuse à 5,00 µM/g de 1,5-dimethyl-1,5-diazaundecamethylene polymethobromide (PB). Le pH de la suspension est ajusté à 8,0 par ajout d'acide sulfurique ou d'hydroxyde de sodium 0,1000 Mole/l.

La masse m de silice est déterminée par la relation suivante :

$$m = \frac{125}{Q_{A.S}}$$

La suspension ainsi constituée est agitée pendant 4 heures à 25°C.

On centrifuge par la suite la suspension à 7500 t/mn pendant 60 mn et le surnageant obtenu est filtré sur filtre millipore de 0,22 µm.

Une solution E est obtenue par ajout de 10,000 g de surnageant filtré dans 90,00 g d'eau bidistillée.

De la même façon, une solution témoin R est obtenue par ajout de 5,000 g de solution de 1,5-dimethyl-1,5-diazaundecamethylene polymethobromide à 5,00 uM/g dans 95,00 g d'eau bidistillée.

Le polyelectrolyde cationique est dosé par turbitimétrie par addition d'une solution aqueuse de Dioctylsulfosuccinate de sodium (DDS) à 10 $\mu$M/g. Les turbidités des solutions E et R sont mesurées à 550nm en fonction du volume de DDS versé. Le point équivalent est déterminé par la quantité de DDS versé correspondant au maximum de turbidité. Soient VE et VR les volumes de DDS versés dans le cas des solutions E et R respectivement.

Le nombre de sites anioniques (en $\mu$Mole/m$^2$) est déterminé par la relation suivante :

$$N_A = 2[250-(125.V_E/V_R)]/m$$

Dans le cas présent, les silices selon l'invention peuvent présenter un nombre de sites anioniques compris entre 5 et 120 $\mu$Mole/m$^2$, et plus particulièrement entre 10 et 60 $\mu$Mole/m$^2$.

D'autre part, le point de charge nulle ou PZC peut également être considéré comme une caractéristique des silices de l'invention.

Ce point de charge nulle (PZC) est défini par le pH d'une suspension de silice pour lequel la charge électrique de la surface du solide est nulle et ce quelle que soit la force ionique du milieu. Ce PZC mesure le pH réel de la surface, dans la mesure où celle-ci est libre de toutes impuretés de ce type ionique.

La charge électrique est déterminée par potentiométrie. Le principe de la méthode est basé sur le bilan global des protons adsorbés ou désorbés sur la surface de la silice à un pH donné.

A partir des équations décrivant le bilan global de l'opération, il est facile de montrer que la charge électrique C de la surface, prise par rapport à une référence correspondant à une charge de surface nulle, est donnée par l'équation :

$$C = \frac{F \cdot (H - OH)}{A.M}$$

dans laquelle :

A représente la surface spécifique du solide en m$^2$/g,
M est la quantité de solide dans la suspension en g,
F est le Faraday,
H ou OH représente la variation par unité de surface de l'excès d'ions H$^+$ ou OH$^-$ respectivement sur le solide.

La mesure expérimentale du PZC se fait de la manière suivante.

On utilise la méthode décrite par Berube et de Bruyn (J. Colloid Interface Sc. 1968, 27, 305).

La silice est lavée au préalable dans de l'eau déionisée de haute résistivité (10 Mega.Ohm.cm); séchée puis dégazée.

On prépare une série de solutions à pHo 8,5 par ajout de KOH ou HNO3 et contenant un électrolyte indifférent (KNO3) a une concentration variable entre 10$^{-5}$ et 10$^{-1}$ Mole/l.

A ces solutions on ajoute une masse donnée de silice et on laisse le pH des suspensions obtenues se stabiliser sous agitation, à 25°C et sous azote pendant 24 heures ; soit pH'o sa valeur.

Des solutions étalons sont constituées par le surnageant obtenu par centrifugation pendant 30 mn à 10000 t/mn d'une partie de ces mêmes suspensions. Soit pH'o le pH de ces surnageants.

On ramène ensuite le pH d'un volume connu de ces suspensions et des solutions étalons correspondantes à pHo en rajoutant la quantité nécessaire de KOH et on laisse les suspensions et les solutions étalons se stabiliser pendant 4 heures.

Le dosage potentiométrique des suspensions est effectué à partir de pHo par addition d'acide nitrique jusqu'à pHf= 2,0.

Préférentiellement on procède par addition d'incrément d'acide correspondant à une variation de pH de 0,2 unité de pH. Après chaque addition, le pH est stabilisé pendant 1 mn.

Soit Vh.Nh le nombre d'équivalents d'acide pour parvenir à pHf.

A partir de pHo, on trace le terme (Vh.Nh - Voh.Noh) en fonction des pH incrémentés pour toutes les suspensions (3 forces ioniques au moins) et pour toutes les solutions étalons correspondantes.

Pour chaque valeur de pH (pas de 0,2 unité) on fait ensuite la différence entre la consommation de H$^+$ ou OH$^-$ pour la suspension et pour la solution étalon correspondante. On renouvelle cette opération pour toutes les forces ioniques.

Ceci donne le terme (H - OH) correspondant à la consommation en protons de la surface. La charge de surface est calculée par l'équation ci-dessus.

On trace ensuite les courbes charge de surface en fonction du pH pour toutes les forces ioniques considérées. Le PZC est défini par l'intersection des courbes.

On ajuste la concentration en silice en fonction de la surface spécifique de celle-ci.

Par exemple, on utilise des suspensions à 2 % pour les silices de 50 m2/g à 3 forces ioniques (0,1 ; 0,01 et 0,001 mole/l).

Le dosage est effectué sur 100 ml de suspension en utilisant de l'hydroxyde de potassium à 0,1 M.

Dans le cas de la présente invention, le PZC peut alors être compris entre 2 et 9, et plus particulièrement entre 3 et 7.

Comme cela apparaîtra plus clairement dans la suite de l'exposé, les caractéristiques de chimie de surface des silices de l'invention, et plus particulièrement les fractions de sites cationiques et les fractions de sites anioniques à la surface desdites silices, peuvent être modulées et contrôlées à volonté, et ceci grâce au procédé de préparation qui est décrit en détails ci-après. On peut en effet d'ores et déjà noter que le procédé de préparation des silices de l'invention consiste essentiellement à doper en surface des silices, au moyen d'un élément métallique au moins divalent précité. Cet élément métallique sera chimiquement lié à cette surface.

L'existence de cette liaision chimique peut être appréhendée par le comportement de la silice lorsqu'elle est mise dans une suspension aqueuse, dans l'eau par exemple, à pH 7. Dans ce cas, on n'observe pas de désorption de l'élément métallique ou qu'une désorption négligeable due à des traces d'élément métallique non lié chimiquement, ces traces pouvant résulter d'une préparation à une pureté moins poussée de la silice.

Sans vouloir être lié ou limité par une théorie particulière, on peut estimer que cette liaison est problablement du type Si-O-X (X désignant l'élément métallique).

Il y a donc lieu de noter que c'est l'élement métallique en tant que tel qui participe à la liaison Si-O-X, et ceci contrairement à certaines silices de l'art antérieur dont la surface peut comporter un élément métallique, sous la forme d'un sel, non chimiquement lié ou adsorbé de façon réversible.

Selon un mode préféré de réalisation de l'invention, les silices présentent alors un rapport [nombre de sites cationiques]/[nombre de sites cationiques + nombre de sites anioniques] compris entre 0,1 et 0,6, et plus particulièrement compris entre 0,1 et 0,4.

Outre les caractéristiques de chimie de surface qui viennent d'être décrites ci-dessus et qui conditionnent la rétention chimique et la capacité d'adsorption des silices de l'invention, ainsi d'ailleurs que la stabilité des suspensions contenant de telles silices, les silices de l'invention peuvent présenter aussi des caractéristiques physiques qui les rendent particulièrement adaptées à une application comme charges pour papiers.

Ces caractéristiques, de type structurel, vont être décrites ci-dessous.

Les silices de l'invention présentent généralement une surface spécifique BET comprise entre 10 et 300 m$^2$/g, de préférence entre 60 et 200 m$^2$/g.

La surface spécifique BET est déterminée selon la méthode BRUNAUER-EMMETT-TELLER décrite dans "The Journal of the American Chemical Society" vol. 60, page 309, February 1938 et selon la norme NF X11-622 (3.3).

Les silices de l'invention peuvent présenter une prise d'huile comprise entre 80 et 500 cm$^3$/100g de silice, cette dernière étant déterminée selon la norme NFT 30-022 (mars 1953) en mettant en oeuvre le phtalate de dibutyle (DBP).

Plus précisément, la prise d'huile peut être comprise entre 100 et 400 cm$^3$/100 g.

Pour ce qui est des caractéristiques de porosité des silices de l'invention, ces dernières peuvent présenter un volume poreux variant entre 1 et 10 cm$^3$/g et plus particulièrement entre 2 et 5 cm$^3$/g (porosimétrie au mercure).

Selon l'invention, les silices sont des silices de précipitation.

Le procédé de préparation des silices de l'invention va maintenant être décrit plus particulièrement.

Comme indiqué plus haut, ce procédé consiste essentiellement, dans ses étapes (a) et (b), en un traitement chimique de surface, c'est-à-dire que seules les caractéristiques de chimie de surface des silices à traiter sont modifiées par le traitement, et non leurs caractéristiques structurelles ou morphologiques.

La première étape (a) du traitement selon l'invention est donc opérée sur des suspensions, généralement aqueuses, de silices.

Selon une première variante de mise en oeuvre du procédé de préparation des silices selon l'invention, on peut opérer la première étape du traitement sur des suspensions qui ont été obtenues simplement par mise en suspension de poudres de silices préalablement synthétisées, ces silices étant, comme déjà signalé, du type précipité.

Classiquement, cette mise en suspension se fait à pH compris entre 6 et 10, à une température d'environ 80°C, et ceci pour un extrait sec en silice de l'ordre de 10 % en poids.

Les silices de type précipité susmentionnées sont des produits déjà bien connus en soi et facilement synthétisables, comme cela va être rappelé maintenant pour les besoins de l'exposé.

Quant aux silices produites par voie humide elles sont généralement obtenues, comme cela est bien connu, par réaction d'un silicate alcalin avec un agent acidifiant tel que l'acide chlorhydrique, l'acide sulfurique ou l'acide carbonique, ce qui donne lieu à la formation d'une suspension de silice ou d'un gel de silice.

Cette réaction peut être conduite de manière quelconque (addition d'acide sur un pied de cuve de silicate, addition simultanée totale ou partielle d'acide et de silicate sur un pied de cuve d'eau ou de solutions de silicate, mûrissement, etc...), le choix se faisant essentiellement en fonction des caractéristiques physiques de la silice que l'on désire obtenir.

On distingue de manière classique les silices de précipitation des gels de silice selon les critères habituels et connus à savoir notamment que les silices précipitées présentent une distribution des pores très dispersée par suite d'une structure discontinue, les gels ayant au contraire une structure tridimensionnelle continue. Les silices de précipitation sont précipitées généralement à un pH voisin de 7 ou à pH basique, les gels étant eux obtenus à un pH habituellement acide ou très acide.

A l'issue de l'étape de précipitation, on procède alors à l'étape de séparation de la silice du milieu réactionnel selon tout moyen connu, filtre sous vide ou filtre presse par exemple.

On recueille ainsi un gâteau de silice, qui est lavé si nécessaire.

Ce gâteau, ou s'il est délité, la suspension de délitage, est séché par tout moyen connu, notamment par atomisation. Le produit séché est broyé si nécessaire pour obtenir la granulométrie désirée.

Un procédé pour la préparation de silices précipitées dont la morphologie est particulièrement adaptée à une application comme charges pour papiers a par exemple été décrit dans la demande de brevet français déposée sous le numéro 89-08874 (correspondant à la demande de brevet européen déposée sous le n° 90401818-1) dont l'enseignement est totalement inclus ici à titre de référence.

Selon cette demande, une silice à porosité contrôlée et donc particulièrement adaptée à une application en papeterie, est préparée de la manière suivante :

- on ajoute simultanément, de manière à maintenir constant le pH du milieu à une valeur comprise entre 7 et 10, un silicate alcalin d'une part et un acide d'autre part, dans une dispersion colloïdale de silice, et ceci en présence d'un électrolyte si nécessaire ;

    cette dispersion colloïdale est par exemple obtenue par chauffage à 60° - 95°C d'une solution aqueuse de silicate alcalin, puis ajout dans cette solution d'un acide jusqu'à l'obtention d'un pH compris entre 8 et 10, de préférence aux environs de 9,5.
- à la fin de l'addition simultanée, on obtient une suspension de silice,
- puis on abaisse le pH de cette suspension par ajout d'acide de telle sorte qu'il se situe entre 3 et 7, notamment entre 5 et 5,5.
- on sépare la silice du milieu de réaction, notamment par filtration,
- on procéde à un lavage poussé du gâteau de filtration, notamment à l'aide d'une eau désionisée,
- on délite le gâteau, puis on le sèche par exemple par atomisation,
- et enfin on broye éventuellement la silice séchée.

Les suspensions de silice sur lesquelles est opérée la première étape du procédé de préparation selon l'invention peuvent avoir été obtenues autrement que par mise en suspension de poudres de silices présynthétisées, conformément à la première variante exposée ci-dessus.

Ainsi, selon une deuxième variante possible de mise en oeuvre du procédé de préparation des silices précipitées de l'invention, les suspensions de silice sur lesquelles est opérée la première étape du traitement de surface correspondent aux suspensions de silice mêmes qui sont obtenues dans le cadre d'un procédé classique de synthèse d'une silice voie humide tel qu'il a été rappelé ci-avant ; une telle suspension peut donc être soit la suspension de silice obtenue en fin de précipitation et avant filtration ou le gel de silice, soit la suspension de silice obtenue après délitage du gâteau de filtration.

Selon cette seconde variante, le procédé de préparation des silices précipitées de l'invention se ramène en fait à un procédé classique de synthèse d'une silice voie humide dans lequel on a simplement intégré au niveau d'au moins une de ses étapes (fin de précipitation et/ou délitage du gâteau de filtration), un traitement supplémentaire tel que défini plus en détails ci-après.

Dans ce cas, la ou les étapes antérieures ou postérieures au traitement conforme à l'invention ne correspondent alors ni plus ni moins qu'aux étapes classiques et connues qui sont mises en oeuvre dans tout procédé de préparation de silices voie humide.

Il est encore une fois important de bien noter que les silices précipitées de l'invention obtenues par un tel procédé ne se distinguent des silices qui seraient obtenues par le même procédé mais sans mise en oeuvre du traitement supplémentaire, que par des seules caractéristiques de chimie de surface et non par des caractéristiques physiques. Il en découle que pour obtenir des silices précipitées conformes à l'invention et présentant des caractéristisques de structure ou de morphologie désirées, il suffit de mettre en oeuvre un procédé classique et connu de préparation de silice précipitée dont on sait qu'il conduit aux silices présentant les caractéristiques physiques voulues, mais dans lequel on aura en outre intégré l'étape du traitement conforme à l'invention. On notera enfin que cette règle de correspondance entre les caractéristiques physiques de la silice précipitée non encore traitée d'une part et de la silice précipitées traitée d'autre part s'applique également à la première variante du procédé de préparation des silices selon l'invention.

Les suspensions de silice précipitée à traiter selon l'invention, et obtenues selon l'une ou l'autre des variantes exposées ci-dessus, peuvent présenter une teneur en silice variant de 5 à 50 % en poids, de préférence comprise entre 10 et 30 % en poids.

Selon l'invention, le pH de ces suspensions doit être inférieur ou égal à 8. Si nécessaire, on ramène donc le pH de la suspension initiale à une telle valeur par ajout d'acide.

Selon l'invention, on traite alors les suspensions de silice précitées avec au moins un sel organique ou inorganique d'un élément métallique au moins divalent.

Parmi les éléments métalliques divalents utilisables, on peut plus particulièrement citer les éléments alcalino-terreux, tels que par exemple le calcium, le strontium et le baryum ; le titane ; le zirconium ; et l'aluminium. Cette liste n'est bien entendu nullement limitative.

Selon un mode particulier et préféré de mise en oeuvre du traitement selon l'invention, on utilise à titre d'élément métallique l'aluminium.

Selon l'invention, ces éléments se présentent sous la forme d'un de leurs sels, organiques ou inorganiques.

A titre de sels organiques, on peut citer notamment les sels d'acides carboxyliques ou polycarboxyliques, comme par exemple l'acide acétique, citrique, tartrique ou oxalique.

A titre de sels inorganiques, on peut citer notamment les halogénures et les oxyhalogénures, comme par exemple les chlorures et les oxychlorures ; les nitrates ; les phosphates ; les sulfates et les oxysulfates.

Il convient de noter, là encore, que cette liste de sels n'est bien entendu donnée qu'à titre purement illustratif.

Dans la pratique, les sels métalliques sont introduits dans les suspensions de silice sous la forme de solutions, généralement aqueuses ; ces sels pourraient également, bien entendu, être introduits sous forme solide, leur dissolution intervenant alors après la mise en contact avec la dispersion de silice. De préférence, les solutions de sels métalliques sont introduites progressivement dans les suspensions de silices, en une ou plusieurs étapes, et ceci de façon à avoir un traitement bien homogène.

La quantité d'élément métallique à introduire dans la suspension de silice peut varier dans de très larges limites.

Dans la pratique, on peut utiliser une quantité d'élément métallique telle que, au niveau de la silice traitée finale, cet élément se retrouve à raison de 0,01 % à 30 % en poids, et plus particulièrement entre 0,5 et 5 % en poids, selon la surface spécifique de la silice.

Le mélange entre les suspensions de silice et les sels métalliques peut être effectué à une température allant de l'ambiante à 100° C, et de préférence à une température supérieure à 60°C. Des températures comprises entre 60° et 80° C conviennent particulièrement bien.

Lors de l'introduction du sel métallique, le pH du milieu de réaction décroît progressivement.

Après que l'introduction du sel métallique soit terminée, on remonte alors, dans une seconde étape, le pH du milieu de réaction à une valeur supérieure ou égale à 3,5.

Cette remontée du pH est effectuée par ajout d'une base dans le milieu de réaction, par exemple au moyen d'une solution d'hydroxyde de sodium ou d'ammoniaque.

La température du milieu lors de cette seconde étape est avantageusement celle qui a été utilisée pour conduire la première étape du traitement.

A l'issue de cette seconde étape, il peut être avantageux de prévoir un mûrissement du milieu réactionnel. Ce mûrissement se fait alors généralement à la température à laquelle la seconde étape du traitement (étape de remontée du pH) a été conduite. La durée du mûrissement peut aller de quelques minutes à quelques heures, de préférence de 10 mn à 1 heure.

Eventuellement, à l'issue soit de la seconde étape soit du mûrissement précité, on peut enfin procéder à un dernier ajustement du pH, ce dernier ajustement étant destiné à fixer le pH de la silice finie en fonction de l'application visée pour celle-ci.

A l'issue du traitement selon l'invention, la silice précipitée traitée est alors séparée du milieu de réaction selon tout moyen, filtre sous vide ou filtre presse par exemple.

On recueille ainsi un gâteau de silice précipitée traitée, qui peut être lavé si nécessaire, par exemple avec l'eau désionisée.

Ce gâteau de silice précipitée traitée, ou s'il est délité, la suspension de délitage de silice précipitée traitée, est séché par tout moyen connu, notamment par atomisation. Le produit séché est broyé si nécessaire pour obtenir la granulométrie désirée.

Comme déjà indiqué ci-avant, on constate donc que les dernières étapes du procédé de préparation des silices de l'invention ne sont en fait que des étapes classiques mises en oeuvre dans tout procédé de synthèse de silice voie humide.

A l'issue du procédé de synthèse selon l'invention, on recueille des silices précipitées dont la chimie de surface est profondément modifiée par rapport aux silices classiques de l'art antérieur. Ainsi, le dopage chimique en élément métallique qui a été réalisé à la surface de la silice précipitée entraîne une modification du nombre et de la nature des sites de surface, qu'ils soient cationiques ou anioniques, modification qui se traduit par une amélioration des propriétés de la silice, comme cela ressortira clairement des exemples donnés ci-après.

Les paramètres qui permettent de contrôler, c'est-à-dire augmenter ou diminuer, le nombre et les proportions de sites cationiques et anioniques à la surface des silices selon l'invention sont essentiellement les suivants : le taux d'éléments métalliques introduits ; le pH initial de la suspension de silice à traiter, c'est à dire le pH éxistant avant que l'on ait eventuellement ramener celui-ci à une valeur inférieure ou égale à 8 pour conduire le traitement ; le pH de la suspension prête à être traitée ; et le pH atteint lorsque l'on procède à la remontée en pH de la suspension traitée (étape b du procédé).

On notera enfin que les suspensions (ou slurries) de silice précipitées qui sont obtenues soit par mise en suspension directe des silice précipitées selon l'invention soit à l'issue des étapes (a) et (b) du traitement selon l'invention exposé ci-avant, constituent en elles-mêmes des compositions particulièrement intéressantes.

En effet, ces suspensions de silices précipitées traitées présentent l'avantage remarquable d'être très stables au cours du temps, et non gélifiantes.

Ceci facilite grandement le transport et le stockage des suspensions de silice en vue d'une utilisation directe comme bains de couchage pour papier.

Dans l'art antérieur qui est illustré par exemple par la demande de brevet français FR 2 627 176, pour éviter la tendance à la sédimentation et à la gélification des suspensions de silice, on est obligé de faire appel à divers additifs. Les suspensions de silices précipitées traitées selon l'invention permettent donc d'obvier aux inconvénients liés à une telle utilisation.

Pour augmenter encore la stabilité de suspensions selon l'invention, il est généralement avantageux de procéder à un broyage humide, notamment au moyen d'un broyeur à bille, de ces dernières, de manière à ramener la taille des particules de silice à une taille convenable.

Des exemples illustrant l'invention vont maintenant être donnés, ainsi qu'une définition préalable des tests utilisés pour quantifier d'une part la capacité d'adsorption et d'autre part la rétention chimique des silices.

### Description du test d'absorption d'encre

Les encres correspondant à chaque couleur élémentaire, magenta, jaune et bleu (encre HEWLETT PACKARD) sont diluées cent fois dans de l'eau permutée. On constitue ainsi trois solutions initiales M, J et B.

On introduit 1 g de silice dans 10 ml de chacune des trois solutions et on laisse agiter pendant 5 mn à 25°C.

Les suspensions sont ensuite centrifugées à 7 500 t/mn pendant 30 mn et les surnageants sont filtrés sur filtre millipore 0.22 micron.

Les concentrations en colorant restant en solution après adsorption, sont déterminées par spectrophotométrie visible au trois longueurs d'ondes suivantes : 548, 360 et 630 nm. Le taux de colorant adsorbé est déterminé par le rapport :

$$\% \text{ ads} = (\text{aire du pic du surnageant/aire du pic de la solution d'origine}) \times 100.$$

### Description du test de rétention chimique des silices sur cellulose

Ce test consiste à mesurer la quantité de silice retenue par adsorption chimique sur les fibres d'une cellulose en utilisant un protocole décrit plus en détails par Unbehend J.E. dans Tappi 1977,60(7)110-112 et modifié pour l'adapter à la mesure de la rétention des silices. Les silices sont impérativement broyées à un diamètre moyen inférieur ou égal à 5,0 micron (mesuré sur un appareil type CILAS). Les mesures sont effectuées sur une cellulose de composition 40 % feuillus et 60 % résineux, de demande cationique égale à 74 microéquivalents/g de cellulose.

Une suspension X est préparée par dispersion dans 300 g d'eau épurée, d'une masse de 10 g (pesée exactement) de cellulose sèche de composition 40 % Feuillus / 60 % Résineux. Cette suspension est homogénéisée sous agitation à une vitesse de 1600 t/mn, en utilisant une turbine type "défloculeuse", pendant 45 mn à 25 °C. Une solution Y est préparée par dissolution dans 189 g d'eau épurée, d'une masse de 1g (pesée exactement) de silice micronisée ($\zeta$ moyen < 5 $\mu$m) et séchée 12h à 120 °C.

La solution Y est ensuite incorporée dans la suspension X toujours sous agitation, afin d'avoir une parfaite homogénéisation du milieu ; le pH est ajusté à une valeur de 6,0 à l'aide d'une solution de soude ou d'acide sulfurique 0,10 M/l.

L'ensemble est défloculé pendant 30 mn à 25°C puis versé dans un appareil type Jar Mark 4. La suspension est agitée à 600 t/mn pendant 10 mn. La suspension est ensuite filtrée sous agitation et sous vide pour récupérer 100 ml de filtrat E.

De la même façon, on prépare une suspension de référence en dispersant 10,0 g de cellulose dans 490 g d'eau. Cette suspension est homogénéisée sous agitation à une vitesse de 1600 t/mn, en utilisant une turbine type "défloculeuse", pendant 45 mn à 25°C. Le pH est ajusté à une valeur de 6,0 à l'aide d'une solution de soude ou d'acide sulfurique 0,10 M/l et l'ensemble est défloculé pendant 30 mn à 25°C puis versé dans un appareil type Jar Mark 4. La suspension est agitée à 600 t/mn pendant 10 mn. La suspension est ensuite filtrée sous agitation et sous vide pour récupérer 100 ml de filtrat R.

Les 100 ml de filtrat R sont placés dans un creuset de masse $m_o$, préalablement calciné à 900°C pendant 5h et refroidit dans un dessicateur ; soit $m_1$ la masse de l'ensemble. L'ensemble est porté à 120°C pendant 12h dans une étuve ventilée pour éliminer toute l'eau ; soit $m_2$ la masse de l'ensemble obtenu après séchage. Celui-ci est ensuite calciné à 900°C pendant 5h et pesé après refroidissement dans un dessicateur ; soit $m_3$ la masse du creuset + silice.

La même opération est effectuée pour le filtrat E. Environ 100 ml de filtrat E sont placés dans un creuset de masse $M_o$, préalablement calciné à 900°C pendant 5h et refroidit dans un déssicateur ; soit $M_1$ la masse de l'ensemble. L'ensemble est porté à 120°C pendant 12h dans une étuve ventilée pour éliminer toute l'eau ; soit $M_2$ la masse de l'ensemble obtenu après séchage. Celui-ci est ensuite calciné à 900°C pendant 5h et pesé après refroidissement dans un dessicateur ; soit $M_3$ la masse du creuset + silice.

Le pourcentage en masse de minéraux extraits de la cellulose par ce procédé et contenus dans le filtrat est déterminé par la relation suivante :

$$P_R = (m_3 - m_0) \times 100/m_1$$

Le taux de rétention exprimé par le rapport entre la masse de silice adsorbée sur les fibres de cellulose et la silice introduite est donné par la relation :

$$T_R = \frac{100 \left[ 0,20 - P_R - \frac{100 (M_3 - M_0)}{M1} \right]}{0,20}$$

Exemple 1 (référence)

Dans un réacteur équipé d'un système de régulation de température et de pH et d'un système d'agitation par Mixel, on introduit 3,33 l de silicate de sodium de concentration en silice de 130 g/l et de rapport molaire $SiO_2/Na_2O = 3,5$ et 16,66 l d'eau permutée de conductivité 1 $\mu$S/cm. Après la mise en marche de l'agitation (350 t/mn), le pied de cuve ainsi constitué est chauffé à 85°C.

Lorsque la température est atteinte, on procède à l'addition de 2,20 l d'acide sulfurique de concentration 80 g/l avec un débit constant de 0,420 l/mn pour amener le pH à 9,2.

On procède par la suite à l'addition simultanée de 33,37 l de silicate de sodium de concentration en silice de 130 g/l, de rapport molaire $SiO_2/Na_2O = 3,5$ et de débit égale à 0,660 l/mn et de 22,70 l d'acide sulfurique à 80 g/l. Le débit d'acide sulfurique est ajusté de manière à maintenir le pH du milieu réactionnel à une valeur constante de 9,0.

Après 50 mn d'addition, on arrête l'addition de silicate de sodium et on continu l'ajout d'acide sulfurique avec un débit de 0,420 l/mn jusqu'à stabiliser le pH du mélange réactionnel à 5,0. On réalise, par la suite, un mûrissement de 15 mn à ce pH. Pendant le mûrissement, le pH est maintenu à 5,0 par ajout d'acide. En fin de mûrissement, le pH est amené à 4,5 par ajout d'acide sulfurique avec un débit de 0,494 l/mn et on réalise par la suite un mûrissement de 10 mn à ce pH.

Après arrêt du chauffage, le mélange est filtré et le gâteau obtenu est lavé à l'eau déionisée jusqu'à obtenir un filtrat de conductivité égale à 1000 $\mu$S/cm. Le gâteau est ensuite délité pour former un slurry à 20 % de silice.

La silice est séchée par atomisation. On procède enfin à un broyage de la silice obtenue sur un broyeur à jet d'air pour obtenir une diamètre moyen de 3 $\mu$m. Les caractéristiques physico-chimiques de la silice ainsi obtenue sont regroupées dans le tableau I ci-après.

Exemple 2 : Préparation d'une silice dopée par 9 % en poids d'aluminium.

10 Kg du slurry à 20 % de silice, issu de l'exemple 1, sont dispersés dans l'eau pour former une suspension à 10 % de silice. Cette suspension est ensuite chauffée à 65°C. Lorsque la température est atteinte, on ajuste le pH du slurry à 7,0 par addition d'une solution aqueuse d'hydroxyde de sodium à 180 g/l. On procède par la suite à l'addition de 5,5 l de solution de sulfate d'aluminium de concentration en $Al_2(SO_4)_3$, $18H_2O$ de 450 g/l avec un débit de 0,550 l/mn. On procède par la suite à une addition de NaOH à 180 g/l avec un débit de 0,560 l/mn pour amener le pH du milieu ainsi constitué à 7,5. On réalise par la suite un mûrissement de 60 mn à 65°C.

En fin de mûrissement, le pH du mélange réactionnel est ajusté à 4,0 par ajout d'acide sulfurique à 80 g/l et on réalise par la suite un mûrissement de 10 mn à ce pH.

Après arrêt du chauffage, le mélange est filtré et le gâteau obtenu est lavé à l'eau déionisée jusqu'à obtenir un filtrat de conductivité égale à 2000 µS/cm. Le gâteau est ensuite délité pour former un slurry à 25 % de silice.

Une partie du slurry de silice ainsi obtenu est séchée par atomisation pour obtenir une silice sous forme de poudre. On procède enfin à un broyage de la silice obtenue sur un broyeur à jet d'air pour obtenir une diamètre moyen de 3 µm. Les caractéristiques physico-chimiques de la silice ainsi obtenue sont regroupées dans le tableau I ci-après.

La deuxième partie du slurry est broyée dans un broyeur à billes de type "NETSCH" équipé d'un bol de 1,2 l rempli de 960 ml de billes d'alumine magnésiée de 1,2 mm. Le broyage est effectué à une vitesse de 2500 t/mn et un débit 10 l/h. Les caractéristiques du slurry de silice ainsi obtenu sont les suivantes :

| | |
|---|---|
| Extrait sec en % poids | 25 |
| Diamètre moyen en µm | 3,0 |
| Viscosité plastique en mPa.s | 22 |
| Seuil d'écoulement en Pa | 5 |
| Stabilité après 4 mois | aucune sédimentation |

Exemple 3 : Préparation d'une silice dopée par 25 % en poids de zirconium.

10 Kg du slurry à 20 % de silice, issu de l'exemple 1, sont dispersés dans l'eau pour former une suspension à 6 % de silice. Cette suspension est ensuite chauffée à 65°C. Lorsque la température est atteinte, on ajuste le pH du slurry à 6,0 par addition d'une solution aqueuse d'hydroxyde de sodium à 180 g/l. On procède par la suite à l'addition de 6,7 l d'une solution d'oxychlorure de Zirconium (ZrOCl$_2$) 1,12 Mole/l de Zr avec un débit de 0,100 l/mn. Après un mûrissement de 10 mn, le pH du mélange réactionnel est ajusté à 4,0 par addition de NaOH à 180 g/l avec un débit de 0,300 l/mn et on réalise par la suite un dernier mûrissement de 60 mn à 65°C.

Après arrêt du chauffage, le mélange est filtré et le gâteau obtenu est lavé à l'eau déionisée. Le gâteau est ensuite délité puis séché par atomisation pour obtenir une silice sous forme de poudre. On procède enfin à un broyage de la silice obtenue sur un broyeur à jet d'air pour obtenir une diamètre moyen de 3 µm. Les caractéristiques physico-chimiques de la silice ainsi obtenue sont regroupées dans le tableau I ci-après.

Exemple 4 : Préparation d'une silice dopée par 15 % en poids de titane.

10 Kg du slurry à 20 % de silice, issu de l'exemple 1, sont dispersés dans l'eau pour former une suspension à 10 % de silice. Cette suspension est ensuite chauffée à 65°C. Lorsque la température est atteinte, on ajuste le pH du slurry à 6,0 par addition d'une solution aqueuse d'hydroxyde de sodium à 180 g/l. On procède par la suite à l'addition de 1,19 Kg d'oxysulfate de Titane (TiOSO$_4$) avec un débit de 0,100 l/mn. Après un mûrissement de 10 mn, le pH du mélange réactionnel est ajusté à 4,0 par addition de NaOH à 180 g/l avec un débit de 0,200 l/mn et on réalise par la suite un dernier mûrissement de 60 mn à 65°C.

Après arrêt du chauffage, le mélange est filtré et le gâteau obtenu est lavé à l'eau déionisée. Le gâteau est ensuite délité puis séché par atomisation pour obtenir une silice sous forme de poudre. On procède enfin à un broyage de la silice obtenue sur un broyeur à jet d'air pour obtenir un diamètre moyen de 3 µm. Les caractéristiques physico-chimiques de la silice ainsi obtenue sont données dans le tableau I ci-après.

Exemple 5 : Préparation d'une silice dopée par 12 % en poids de calcium.

10 Kg du slurry à 20 % de silice, issu de l'exemple 1, sont dispersés dans l'eau pour former une suspension à 10 % de silice. Cette suspension est ensuite chauffée à 65°C. Lorsque la température est atteinte, on ajuste le pH du slurry à 6,0 par addition d'une solution aqueuse d'hydroxyde de sodium à 180 g/l. On procède par la suite à l'addition, sous agitation, de 1,22 Kg de nitrate de calcium. Après un mûrissement de 30 mn, le pH du mélange réactionnel est ajusté à 4,0 par addition de NaOH 180 g/l avec un débit de 0,200 l/mn et on réalise par la suite un dernier mûrissement de 60 mn à 65°C.

Après arrêt du chauffage, le mélange est filtré et le gâteau obtenu est lavé à l'eau déionisée. Le gâteau est ensuite délité puis séché par atomisation pour obtenir une silice sous forme de poudre. On procède enfin à un broyage de la silice obtenue sur un broyeur à jet d'air pour obtenir une diamètre moyen de 3 µm. Les caractéristiques physico-chimiques de la silice ainsi obtenue sont regroupées dans le tableau I ci-après.

Exemple 6 : Préparation d'une silice dopée par 9 % en poids d'aluminium.

Dans un réacteur équipé d'un système de régulation de température et de pH et d'un système d'agitation par Mixel, on introduit 3,33 l de silicate de sodium de concentration en silice de 130 g/l et de rapport molaire $SiO_2/Na_2O = 3,5$ et 16,66 l d'eau permutée de conductivité 1 $\mu$S/cm. Après la mise en marche de l'agitation (350 t/mn), le pied de cuve ainsi constitué est chauffé à 85°C. Lorsque la température est atteinte, on procède à l'addition d'acide sulfurique de concentration 80 g/l avec un débit constant de 0,420 l/mn pour amener le pH à 9,0.

On procède par la suite à l'addition simultanée de 33,37 l de silicate de sodium de concentration en silice de 130 g/l, de rapport molaire $SiO_2/Na_2O = 3,5$ et de débit égal à 0,660 l/mn et de 22,70 l d'acide sulfurique à 80 g/l. Le débit d'acide sulfurique est ajusté de manière à maintenir le pH du milieu réactionnel à une valeur constante de 9,0. Après 50 mn d'addition, on arrête l'addition de silicate de sodium et on continu l'ajout d'acide sulfurique avec un débit de 0,420 l/mn jusqu'à stabiliser le pH du mélange réactionnel à 5,5. Pendant cette phase, la température du milieu est régulée à 65°C. On réalise, par la suite, un mûrissement de 15 mn à ce pH. Pendant le mûrissement, le pH est maintenu à 5,5 par ajout d'acide. En fin de mûrissement, la silice subit un traitement de surface selon le protocole suivant :

lorsque la température du mélange réactionnel atteint la valeur de 65°C, on ajoute 15 l de solution de sulfate d'aluminium de concentration en $Al_2(SO_4)_3,18H_2O$ de 450 g/l avec un débit de 0,720 l/mn. On procède par la suite à une addition de NaOH à 180 g/l avec un débit de 0,560 l/mn pour amener le pH du milieu ainsi constitué à 7,5. On réalise par la suite un mûrissement de 60 mn à 65°C.

En fin de mûrissement, le pH du mélange réactionnel est ajusté à 4,2 par ajout d'acide sulfurique à 80 g/l, puis on réalise un mûrissement de 15 mn.

Après arrêt du chauffage, le mélange est filtré et le gâteau obtenu est lavé à l'eau déionisée jusqu'à obtenir un filtrat de conductivité égale à 2000 $\mu$S/cm. Le gâteau est ensuite délité pour former un slurry à 25 % de silice.

Une partie du slurry de silice ainsi obtenu, est séchée par atomisation pour obtenir une silice sous forme de poudre. On procède enfin à un broyage de la silice obtenue sur un broyeur à jet d'air pour obtenir une diamètre moyen de 3 $\mu$m.

Les caractéristiques physico-chimiques de la silice ainsi obtenue sont regroupées dans le tableau I ci-après.

La deuxième partie du slurry est broyée dans un broyeur à billes de type "NETSCH" équipé d'un bol de 1,2 l rempli de 960 ml de billes d'alumine magnésiée de 1,2 mm. Le broyage est effectué à une vitesse de 2500 t/mn et un débit 10 l/h. Les caractéristiques du slurry de silice ainsi obtenu sont les suivantes :

| Extrait sec en % poids | 25 |
|---|---|
| Diamètre moyen en $\mu$m | 3,0 |
| Viscosité plastique en mPa.s | 20 |
| Seuil d'écoulement en Pa | 0 |
| Stabilité après 4 mois | aucune sédimentation |

Exemple 7 : Préparation d'une silice dopée par 19 % en poids d'aluminium.

Une bouillie de silice est préparée comme sur l'exemple 6.

Lorsque la température du mélange réactionnel atteint la valeur de 65°C, on ajoute 30 l de solution de sulfate d'aluminium de concentration en $Al_2(SO_4)_3,18H_2O$ de 450 g/l avec un débit de 1,20 l/mn. On procède par la suite à une addition de NaOH à 180 g/l avec un débit de 0,560 l/mn pour amener le pH du milieu ainsi constitué à 6,5. On réalise par la suite un mûrissement de 60 mn à 65°C.

En fin de mûrissement, le pH du mélange réactionnel est ajusté à 4,2 par ajout d'acide sulfurique à 80 g/l, puis on réalise un mûrissement de 15 mn.

Après arrêt du chauffage, le mélange est filtré et le gâteau obtenu est lavé à l'eau déionisée jusqu'à obtenir un filtrat de conductivité égale à 2000 $\mu$S/cm. Le gâteau est ensuite délité pour former un slurry à 25 % de silice.

Une partie du slurry de silice ainsi obtenu, est séchée par atomisation pour obtenir une silice sous forme de poudre. On procède enfin à un broyage de la silice obtenue sur un broyeur à jet d'air pour obtenir une diamètre moyen de 3 $\mu$m.

Les caractéristiques physico-chimiques de la silice ainsi obtenue sont regroupées dans le tableau I ci-après.

La deuxième partie du slurry est broyée dans un broyeur à billes de type "NETSCH" équipé d'un bol de 1,2 l rempli de 960 ml de billes d'alumine magnésiée de 1,2 mm. Le broyage est effectué à une vitesse de 2500 t/mn et un débit 10 l/h. Les caractéristiques du slurry de silice ainsi obtenu sont les suivantes :

| Extrait sec en % poids | 25 |
|---|---|
| Diamètre moyen en $\mu$m | 3,0 |
| Viscosité plastique en mPa.s | 20 |
| Seuil d'écoulement en Pa | 0 |
| Stabilité après 4 mois | aucune sédimentation |

Exemple 8 : Préparation d'une silice dopée par 1 % en poids d'aluminium.

Une bouillie de silice est préparée comme sur l'exemple 6.

Lorsque la température du mélange réactionnel atteint la valeur de 75°C, on ajoute 1,61 de solution de sulfate d'aluminium de concentration en $Al_2(SO_4)_3,18H_2O$ de 450 g/l avec un débit de 0,075 l/mn. On procède par la suite à une addition de NaOH à 180 g/l avec un débit de 0,250 l/mn pour amener le pH du milieu ainsi constitué à 8,0. On réalise par la suite un mûrissement de 60 mn à 75°C.

En fin de mûrissement, le pH du mélange réactionnel est ajusté à 4,2 par ajout d'acide sulfurique à 80 g/l, puis on réalise un mûrissement de 15 mn.

Après arrêt du chauffage, le mélange est filtré et le gâteau obtenu est lavé à l'eau déionisée jusqu'à obtenir un filtrat de conductivité égale à 2000 µS/cm. Le gâteau est ensuite délité pour former un slurry à 25 % de silice.

Une partie du slurry de silice ainsi obtenu, est séchée par atomisation pour obtenir une silice sous forme de poudre. On procède enfin à un broyage de la silice obtenue sur un broyeur à jet d'air pour obtenir une diamètre moyen de 3 µm.

Les caractéristiques physico-chimiques de la silice ainsi obtenue sont regroupées dans le tableau I ci-après.

La deuxième partie du slurry est broyée dans un broyeur billes de type "NETSCH" équipé d'un bol de 1,2 l rempli de 960 ml de billes d'alumine magnésiée de 1,2 mm. Le broyage est effectué à une vitesse de 2500 t/mn et un débit 10 l/h. Les caractéristiques du slurry de silice ainsi obtenu sont les suivantes :

| | |
|---|---|
| Extrait sec en % poids | 25 |
| Diamètre moyen en µm | 3,0 |
| Viscosité plastique en mPa.s | 15 |
| Seuil d'écoulement en Pa | 0 |
| Stabilité après 4 mois | aucune sédimentation |

Exemple 9 : Préparation d'une silice dopée par 5 % en poids d'aluminium.

Dans un réacteur équipé d'un système de régulation de température et de pH et d'un système d'agitation par Mixel, on introduit 4,52 l de silicate de sodium de concentration en silice de 130 g/l et de rapport molaire $SiO_2/Na_2O = 3,42$ et 12,48 l d'eau permutée de conductivité 1 µS/cm. Après la mise en marche de l'agitation (350 t/mn), le pied de cuve ainsi constitué est chauffé à 90°C. Lorsque la température est atteinte, on procède à l'addition d'acide sulfurique de concentration 80 g/l avec un débit constant de 0,420 l/mn pour amener le pH à 9,0.

On procède par la suite à l'addition simultanée de 33,37 l de silicate de sodium de concentration en silice de 130 g/l, de rapport molaire $SiO_2/Na_2O = 3,42$ et de débit égal à 0,660 l/mn et de 23,30 l d'acide sulfurique à 80 g/l. Le débit d'acide sulfurique est ajusté de manière à maintenir le pH du milieu réactionnel à une valeur constante de 9,0. Après 50 mn d'addition, on arrête l'addition de silicate de sodium et on continu l'ajout d'acide sulfurique avec un débit de 0,420 l/mn jusqu'à stabiliser le pH du mélange réactionnel à 5,5. Pendant cette phase, la température du milieu est régulée à 75°C. On réalise, par la suite, un mûrissement de 15 mn à ce pH. Pendant le mûrissement, le pH est maintenu à 5,5 par ajout d'acide. En fin de mûrissement, la silice subit un traitement de surface selon le protocole suivant :

lorsque la température du mélange réactionnel atteint la valeur de 75°C, on ajoute 7,40 l de solution de sulfate d'aluminium de concentration en $Al_2(SO_4)_3,18H_2O$ de 450 g/l avec un débit de 0,720 l/mn. On procède par la suite à une addition de NaOH à 180 g/l avec un débit de 0,560 l/mn pour amener le pH du milieu ainsi constitué à 8,0. On réalise par la suite un m0rissement de 60 mn à 75°C.

En fin de mûrissement, le pH du mélange réactionnel est ajusté à 4,2 par ajout d'acide sulfurique à 80 g/l, puis on réalise un mûrissement de 15 mn.

Après arrêt du chauffage, le mélange est filtré et le gâteau obtenu est lavé à l'eau déionisée jusqu'à obtenir un filtrat de conductivité égale à 2000 µS/cm. Le gâteau est ensuite délité pour former un slurry à 25 % de silice.

Une partie du slurry de silice ainsi obtenu, est séchée par atomisation pour obtenir une silice sous forme de poudre. On procède enfin à un broyage de la silice obtenue sur un broyeur à jet d'air pour obtenir une diamètre moyen de 3 µm.

Les caractéristiques physico-chimiques de la silice ainsi obtenue sont regroupées dans le tableau I ci-après.

La deuxième partie du slurry est broyée dans un broyeur à billes de type "NETSCH" équipé d'un bol de 1,2 l rempli de 960 ml de billes d'alumine magnésiée de 1,2 mm. Le broyage est effectué à une vitesse de 2500 t/mn et un débit 10 l/h. Les caractéristiques du slurry de silice ainsi obtenu sont les suivantes :

| | |
|---|---|
| Extrait sec en % poids | 25 |
| Diamètre moyen en µm | 3,0 |
| Viscosité plastique en mPa.s | 15 |

(suite)

| | |
|---|---|
| Seuil d'écoulement en Pa | 0 |
| Stabilité après 4 mois | aucune sédimentation |

<u>Exemple 10</u> : Préparation d'une silice dopée par 3,1 % en poids d'aluminium.

Dans un réacteur équipé d'un système de régulation de température et de pH et d'un système d'agitation par Mixel, on introduit 5,30 l de silicate de sodium de concentration en silice de 130 g/l et de rapport molaire $SiO_2/Na_2O = 3,32$ et 10,00 l d'eau permutée de conductivité 1 µS/cm. Après la mise en marche de l'agitation (350 t/mn), le pied de cuve ainsi constitué est chauffé à 90°C. Lorsque la température est atteinte, on procède à l'addition d'acide sulfurique de concentration 80 g/l avec un débit constant de 0,38 l/mn pour amener le pH à 9,2.

On procède par la suite à l'addition simultanée de 44,70 l de silicate de sodium de concentration en silice de 130 g/l, de rapport molaire $SiO_2/Na_2O = 3,32$ et de débit égal à 0,745 l/mn et de 32,10 l d'acide sulfurique à 80 g/l. Le débit d'acide sulfurique est ajusté de manière à maintenir le pH du milieu réactionnel à une valeur constante de 9,0. Après 60 mn d'addition, on arrête l'addition de silicate de sodium et on continu l'ajout d'acide sulfurique avec un débit de 0,350 l/mn jusqu'à stabiliser le pH du mélange réactionnel à 5,0. Pendant cette phase, la température du milieu est régulée à 75°C. On réalise, par la suite, un mûrissement de 30 mn à ce pH. Pendant le mûrissement, le pH est maintenu à 5,0 par ajout d'acide. En fin de mûrissement, la silice subit un traitement de surface selon le protocole suivant :

lorsque la température du mélange réactionnel atteint la valeur de 75°C, on ajoute 6,20 l de solution de sulfate d'aluminium de concentration en $Al_2(SO_4)_3,18H_2O$ de 450 g/l avec un débit de 0,720 l/mn. On procède par la suite à une addition de NaOH à 180 g/l avec un débit de 0,560 l/mn pour amener le pH du milieu ainsi constitué à 8,0. On réalise par la suite un mûrissement de 30 mn à 75°C.

En fin de mûrissement, le pH du mélange réactionnel est ajusté à 4,2 par ajout d'acide sulfurique à 80 g/l, puis on réalise un mûrissement de 15 mn.

Après arrêt du chauffage, le mélange est filtré et le gâteau obtenu est lavé à l'eau déionisée jusqu'à obtenir un filtrat de conductivité égale à 2000 µS/cm. Le gâteau est ensuite délité pour former un slurry à 35 % de silice.

Une partie du slurry de silice ainsi obtenu, est séchée par atomisation pour obtenir une silice sous forme de poudre. On procède enfin à un broyage de la silice obtenue sur un broyeur à jet d'air pour obtenir une diamètre moyen de 3 µm.

Les caractéristiques physico-chimiques de la silice ainsi obtenue sont regroupées dans le tableau I ci-après.

La deuxième partie du slurry est broyée dans un broyeur à billes de type "NETSCH" équipé d'un bol de 1,2 l rempli de 960 ml de billes d'alumine magnésiée de 1,2 mm. Le broyage est effectué à une vitesse de 2500 t/mn et un débit 10 l/h. Les caractéristiques du slurry de silice ainsi obtenu sont les suivantes :

| | |
|---|---|
| Extrait sec en % poids | 35 |
| Diamètre moyen en µm | 3,0 |
| Viscosité plastique en mPa.s | 20 |
| Seuil d'écoulement en Pa | 0 |
| Stabilité après 4 mois | aucune sédimentation |

<u>Exemple 11</u> : Préparation d'une silice dopée par 9 % en poids d'aluminium.

2 Kg de silice TIXOSIL 45 commercialisée par RHONE-POULENC sont dispersés dans 18 Kg d'eau, par agitation mécanique (Turbine à 1500 t/mn), pour former une suspension à 10 % de silice. La suspension ainsi formée est broyée dans un broyeur à billes de type "NETSCH" équipé d'un bol de 1,2 l rempli de 960 ml de billes d'alumine magnésiée de 1,2 mm. Le broyage est effectué à une vitesse de 2500 t/mn et un débit 10 l/h.

La suspension obtenue après broyage, est ensuite chauffée à 65°C. Lorsque la température est atteinte, on ajuste le pH du slurry à 5,0 par addition d'une solution aqueuse d'acide sulfurique à 80 g/l. On procède par la suite à l'addition de 5,5 l de solution de sulfate d'aluminium de concentration en $Al_2(SO_4)-_3,18H_2O$ de 450 g/l avec un débit de 0,550 l/mn. Le pH du milieu ainsi constitué est ensuite ajusté à 7,5 par addition de NaOH à 180 g/l avec un débit de 0,560 l/mn. On réalise par la suite un mûrissement de 60 mn à 65°C. En fin de mûrissement, le pH du mélange réactionnel est ajusté à 4,0 par ajout d'acide sulfurique à 80 g/l et on réalise par la suite un mûrissement de 10 mn à ce pH. Après arrêt du chauffage, le mélange est filtré et le gâteau obtenu est lavé à l'eau déionisée jusqu'à obtenir un filtrat de conductivité égale à 2000 µS/cm/. Le gâteau est ensuite délité pour former un slurry à 20 % de silice.

Une partie du slurry de silice ainsi obtenu est séchée par atomisation pour obtenir une silice sous forme de poudre. On procède enfin à un broyage de la silice obtenue sur un broyeur à jet d'air pour obtenir un diamètre moyen de 3 µm. Les caractéristiques physico-chimiques de la silice ainsi obtenue sont regroupées dans le tableau I ci-après.

La deuxième partie du slurry est broyée dans un broyeur à billes de type "NETSCH" équipé d'un bol de 1,2 l rempli de 960 ml de billes d'alumine magnésiée de 1,2 mm. Le broyage est effectué à une vitesse de 2500 t/mn et un débit 10 l/h. Les caractéristiques du slurry de silice ainsi obtenu sont les suivantes :

| | |
|---|---|
| Extrait sec en % poids | 20 |
| Diamètre moyen en μm | 3,0 |
| Viscosité plastique en mPa.s | 22 |
| Seuil d'écoulement en Pa | 5 |
| Stabilité après 4 mois | aucune sédimentation |

Exemple 12 :

A titre comparatif, on a consigné dans le tableau II ci-après les caractéristiques de silices commerciales classiques.

## TABLEAU I

### CARACTERISTIQUES DES SILICES

| SILICES | DOPANT | S BET m$^2$/g | PRISE D'HUILE ml/100g | VOLUME POREUX cm$^3$/g | NC µM/m$^2$ | NA µM/m$^2$ | PZC | TR % | AE % |
|---|---|---|---|---|---|---|---|---|---|
| Ex. 1 | - | 170 | 390 | 3,30 | 0,05 | 16 | 2,50 | 10 | 5 |
| Ex. 2 (a) | Al | 160 | 370 | 4,20 | 1,50 | 10 | 4,00 | 52 | 75 |
| Ex. 3 (a) | Zr | 160 | 370 | 4,20 | 1,70 | 11 | 4,20 | 60 | 85 |
| Ex. 4 (a) | Ti | 160 | 320 | 3,5 | 1,60 | 11 | 4,40 | 55 | 85 |
| Ex. 5 (a) | Ca | 160 | 320 | 3,7 | 1,10 | 12 | 3,70 | 45 | 60 |
| Ex. 6 (b) | Al | 160 | 370 | 4,60 | 1,65 | 10 | 4,50 | 70 | 90 |
| Ex. 7 (b) | Al | 150 | 350 | 4,20 | 3,30 | 6 | 4,50 | 85 | 95 |
| Ex. 8 (b) | Al | 175 | 360 | 4,80 | 0,50 | 12 | 3,20 | 40 | 55 |
| Ex. 9 (b) | Al | 120 | 230 | 3,9 | 1,70 | 10 | 4,00 | 70 | 80 |
| Ex. 10 (b) | Al | 60 | 130 | 1,90 | 1,80 | 10 | 4,00 | 70 | 80 |
| Ex. 11 (c) | Al | 170 | 370 | 4,00 | 1,35 | 8 | 3,80 | 65 | 70 |

Origine de la suspension traitée :

(a) gâteau de filtration
(b) bouillie de précipitation
(c) poudre

EP 0 493 263 B2

## TABLEAU II

### SILICES COMMERCIALES

| SILICES | $S_{BET}$ m²/g | $N_C$ µM/m² | $N_A$ µM/m² | PZC | TR % | AE % |
|---|---|---|---|---|---|---|
| TIXOSIL 331(1) | 175 | 0,00 | 16 | 2,60 | 5 | 0 |
| ZEOSIL 77 (2) | 180 | 0,00 | 15 | 2,50 | 5 | 0 |
| ZEOSIL 113 (3) | 100 | 0,00 | 16 | 2,50 | 5 | 0 |
| SIPERNAT 22 (4) | 200 | 0,03 | 10 | 2,50 | 6 | 0 |

(1) et (2) : silices commercialisées par la société RHONE-POULENC

(3) : silice commercialisée par la société HUBER Corp.

(4) : silice commercialisée par la société DEGUSSA.

## Revendications

### Revendications pour les Etats contractants suivants : AT, CH, DE, FR, GB, IT, LI, NL, SE

1.  Silice précipitée caractérisée en ce qu'elle présente une chimie de surface telle que son nombre de sites cationiques, exprimé en microMole/m² de silice, soit supérieur à 0,05 et en ce qu'elle contient au moins un élément métallique au moins divalent chimiquement lié à sa surface, choisi dans le groupe comprenant les alcalino-terreux, le titane, le zirconium, et l'aluminium.

2.  Silice précipitée selon la revendication 1, caractérisée en ce que ledit élément métallique est l'aluminium.

3.  Silice précipitée selon la revendication 1 ou 2, caractérisée en ce que ledit nombre de sites cationiques est d'au moins 0,1 microMole/m².

4.  Silice précipitée selon la revendication 3, caractérisée en ce que ledit nombre de sites cationiques est compris entre 0,2 et 60 microMole/m².

5.  Silice précipitée selon l'une quelconque des revendications précédentes, caractérisée en ce que son point de charge nulle (PZC) est compris entre 2 et 9.

6.  Silice précipitée selon la revendication 5, caractérisée en ce que ledit point de charge nulle est compris entre 3 et 7.

7.  Silice précipitée selon l'une quelconque des revendications précédentes, caractérisée en ce que le nombre de sites anioniques, exprimé en microMole/m² de silice, est compris entre 5 et 120.

8.  Silice précipitée selon la revendication 7, caractérisée en ce que ledit nombre de sites anioniques est compris entre 10 et 60 microMole/m$^2$.

9. Silice précipitée selon l'une quelconque des revendications précédentes, caractérisée en ce que le rapport (nombre de sites cationiques)/(nombre de sites cationiques + nombre de sites anioniques) est compris entre 0,1 et 0,6, et plus particulièrement entre 0,1 et 0,4.

10. Silice précipitée selon l'une quelconque des revendications précédentes, caractérisée en ce qu'elle présente une surface spécifique BET comprise entre 10 et 300 m$^2$/g.

11. Silice précipitée selon la revendication 10, caractérisée en ce que ladite surface BET est comprise entre 60 et 200 m$^2$/g.

12. Silice précipitée selon l'une quelconque des revendications précédentes, caractérisée en ce qu'elle présente une prise d'huile DBP comprise entre 80 et 500 cm$^3$/100 g.

13. Silice précipitée selon la revendication 12, caractérisée en ce que ladite prise d'huile est comprise entre 100 et 400 cm$^3$/100 g.

14. Silice précipitée selon l'une quelconque des revendications précédentes, caractérisée en ce qu'elle présente un volume poreux compris entre 1 et 10 cm$^3$/g.

15. Silice précipitée selon la revendication 14, caractérisée en ce que ledit volume poreux est compris entre 2 et 5 cm$^3$/g.

16. Silice précipitée selon l'une quelconque des revendications précédentes, caractérisée en ce que la teneur en élément métallique est comprise entre 0,01 et 30 % en poids.

17. Silice précipitée selon la revendication 16, caractérisée en ce que ladite teneur est comprise entre 0,5 et 5 % en poids.

18. Procédé de synthèse d'une silice précipitée telle que notamment définie à l'une quelconque des revendications précédentes, caractérisé en ce qu'il consiste (a) à faire subir à une suspension de silice précipitée présentant un pH d'au plus 8, un traitement avec un sel organique ou inorganique d'un élément métallique au moins divalent précité, (b) puis, à l'issue de ce traitement, à remonter le pH du milieu réactionnel à une valeur supérieure ou égale à 3,5, (c) à séparer ensuite la silice précipitée dudit milieu, et (d) à enfin sécher la silice précipitée obtenue.

19. Procédé selon la revendication 18, caractérisé en ce que ladite suspension de silice précipitée a été obtenue par mise en suspension d'une poudre de silice présynthétisée.

20. Procédé selon la revendication 18, caractérisé en ce que ladite suspension de silice précipitée a été obtenue par délitage d'un gâteau de filtration issu d'une réaction de précipitation de silice.

21. Procédé selon la revendication 18, caractérisé en ce que ladite suspension de silice précipitée est la suspension directement obtenue à l'issue d'une réaction de précipitation de silice.

22. Procédé selon l'une quelconque des revendications 18 à 21, caractérisé en ce que ledit sel organique est choisi parmi les sels d'acides carboxyliques et polycarboxyliques, et ledit sel inorganique parmi les halogénures, les oxyhalogénures, les nitrates, les phosphates, les sulfates et les oxysulfates.

23. Procédé selon l'une des revendications 18 à 22, caractérisé en ce que l'élément métallique au moins divalent est l'aluminium.

24. Procédé selon l'une quelconque des revendications 18 à 23, caractérisé en ce que ledit traitement est opéré à une température comprise entre l'ambiante et 100°C, de préférence à une température comprise entre 60 et 80°C.

25. Procédé selon l'une quelconque des revendications 18 à 24, caractérisé en ce que, à l'issue de l'étape (b), on procède à un mûrissement du milieu réactionnel.

**26.** Procédé selon l'une quelconque des revendications 18 à 25, caractérisé en ce que, à l'issue de l'étape (b) suivie éventuellement d'un mûrissement, on procède à un ajustement du pH du milieu réactionnel de manière à fixer le pH de la silice précipitée finie.

**27.** Silice précipitée susceptible d'être obtenue par un procédé tel que défini à l'une quelconque des revendications 18 à 26.

**28.** Suspension de silice précipitée, caractérisée en ce qu'elle comprend une silice précipitée telle que définie à l'une quelconque des revendications 1 à 17 et 27.

**29.** Suspension de silice précipitée telle qu'obtenue après la mise en oeuvre de l'étape (b) et avant la mise en oeuvre de l'étape (c) d'un procédé tel que défini à l'une quelconque des revendications 18 à 26.

**30.** Suspension de silice précipitée telle qu'obtenue après la mise en oeuvre de l'étape (c) et avant la mise en oeuvre de l'étape (d) d'un procédé tel que défini à l'une quelconque des revendications 18 à 26.

**31.** Utilisation d'une silice précipitée telle que définie à l'une quelconque des revendications 1 à 17 et 27, comme charge pour papier.

**32.** Utilisation d'une silice précipitée comme charge pour papier caractérisée en ce qu'elle présente une chimie de surface telle que son nombre de sites cationiques, exprimé en microMole/m$^2$ de silice, soit supérieur à 0,05.

**33.** Utilisation d'une silice précipitée selon la revendication 32, caractérisée en ce que ledit nombre de sites cationiques est d'au moins 0,1 microMole/m$^2$.

**34.** Utilisation d'une silice précipitée selon la revendication 33, caractérisée en ce que ledit nombre de sites cationiques est compris entre 0,2 et 60 microMole/m$^2$.

**35.** Utilisation d'une suspension de silice précipitée telle que définie à l'une quelconque des revendications 28 à 30, comme bain de couchage pour papier.

**Revendications pour l'Etat contractant suivant : ES**

**1.** Procédé de synthèse d'une silice précipitée présentant une chimie de surface telle que son nombre de sites cationiques, exprimé en microMole/m$^2$ de silice, soit supérieur à 0,05, et contenant au moins un élément métallique au moins divalent chimiquement lié à sa surface, choisi dans le groupe comprenant les alcalino-terreux, le titane, le zirconium, et l'aluminium, caractérisé en ce qu'il consiste (a) à faire subir à une suspension de silice précipitée présentant un pH d'au plus 8, un traitement avec un sel organique ou inorganique d'un élément métallique au moins divalent, (b) puis, à l'issue de ce traitement, à remonter le pH du milieu réactionnel à une valeur supérieure ou égale à 3,5, (c) à séparer ensuite la silice précipitée dudit milieu et (d) à enfin sécher la silice précipitée obtenue.

**2.** Procédé selon la revendication 1, caractérisé en ce que ledit élément métallique est l'aluminium.

**3.** Procédé selon la revendication 1 ou 2, caractérisé en ce que ledit nombre de sites cationiques est d'au moins 0,1 microMole/m$^2$.

**4.** Procédé selon la revendication 3, caractérisé en ce que ledit nombre de sites cationiques est compris entre 0,2 et 60 microMole/m$^2$.

**5.** Procédé selon l'une quelconque des revendications précédentes, caractérisé en ce que ladite silice précipitée présente un point de charge nulle (PZC) compris entre 2 et 9.

**6.** Procédé selon la revendication 5, caractérisé en ce que ledit point de charge nulle est compris entre 3 et 7.

**7.** Procédé selon l'une quelconque des revendications précédentes, caractérisé en ce que ladite silice précipitée présente un nombre de sites anioniques, exprimé en microMole/m$^2$ de silice précipitée, compris entre 5 et 120.

8. Procédé selon la revendication 7, caractérisé en ce que ledit nombre de sites anioniques est compris entre 10 et 60 microMole/m$^2$.

9. Procédé selon l'une quelconque des revendications précédentes, caractérisé en ce que ladite silice précipitée présente un rapport (nombre de sites cationiques)/(nombre de sites cationiques + nombre de sites anioniques) compris entre 0,1 et 0,6, et plus particulièrement entre 0,1 et 0,4.

10. Procédé selon l'une quelconque des revendications précédentes, caractérisé en ce que ladite silice précipitée présente une surface spécifique BET comprise entre 10 et 300 m$^2$/g.

11. Procédé selon la revendication 10, caractérisé en ce que ladite surface BET est comprise entre 60 et 200 m$^2$/g.

12. Procédé selon l'une quelconque des revendications précédentes, caractérisé en ce que ladite silice précipitée présente une prise d'huile DBP comprise entre 80 et 500 cm$^3$/100 g.

13. Procédé selon la revendication 12, caractérisé en ce que ladite prise d'huile est comprise entre 100 et 400 cm$^3$/100 g.

14. Procédé selon l'une quelconque des revendications précédentes, caractérisé en ce que ladite silice précipitée présente un volume poreux compris entre 1 et 10 cm$^3$/g.

15. Procédé selon la revendication 14, caractérisé en ce que ledit volume poreux est compris entre 2 et 5 cm3/g.

16. Procédé selon l'une des revendications précédentes, caractérisé en ce que la teneur en élément métallique est comprise entre 0,01 et 30 % en poids.

17. Procédé selon la revendication 16, caractérisé en ce que ladite teneur est comprise entre 0,5 et 5 % en poids.

18. Procédé selon l'une des revendications 1 à 17, caractérisé en ce que ladite suspension de silice précipitée a été obtenue par mise en suspension d'une poudre de silice présynthétisée.

19. Procédé selon l'une des revendications 1 à 17, caractérisé en ce que ladite suspension de silice précipitée a été obtenue par délitage d'un gâteau de filtration issu d'une réaction de précipitation de silice.

20. Procédé selon l'une des revendications 1 à 17, caractérisé en ce que ladite suspension de silice précipitée est la suspension directement obtenue à l'issue d'une réaction de précipitation de silice.

21. Procédé selon l'une quelconque des revendications 1 à 21, caractérisé en ce que ledit sel organique est choisi parmi les sels d'acides carboxyliques et polycarboxyliques, et ledit sel inorganique parmi les halogénures, les oxyhalogénures, les nitrates, les phosphates, les sulfates et les oxysulfates.

22. Procédé selon l'une quelconque des revendications 1 à 21, caractérisé en ce que ledit traitement est opéré à une température comprise entre l'ambiante et 100°C, de préférence à une température comprise entre 60 et 80°C.

23. Procédé selon l'une quelconque des revendications 1 à 22, caractérisé en ce que, à l'issue de l'étape (b), on procède à un mûrissement du milieu réactionnel.

24. Procédé selon l'une quelconque des revendications 1 à 23, caractérisé en ce que, à l'issue de l'étape (b) suivie éventuellement d'un mûrissement, on procède à un ajustement du pH du milieu réactionnel de manière à fixer le pH de la silice précipitée finie.

25. Suspension de silice précipitée, caractérisée en ce qu'elle comprend une silice précipitée obtenue par un procédé tel que défini à l'une quelconque des revendications 1 à 24.

26. Suspension de silice précipitée telle qu'obtenue après le mise en oeuvre de l'étape (b) et avant la mise en oeuvre de l'étape (c) d'un procédé tel que défini à l'une quelconque des revendications 1 à 24.

27. Suspension de silice précipitée telle qu'obtenue après la mise en oeuvre de l'étape (c) et avant la mise en oeuvre de l'étape (d) d'un procédé tel que défini à l'une quelconque des revendications 1 à 24.

28. Utilisation d'une silice précipitée obtenue par un procédé tel que défini à l'une quelconque des revendications 1 à 24, comme charge pour papier.

29. Utilisation d'une silice précipitée comme charge pour papier, présentant une chimie de surface telle que son nombre de sites cationiques, exprimé en microMole/m$^2$ de silice, soit supérieur à 0,05, caractérisée en ce que la silice précipitée est susceptible d'être obtenue par un procédé de synthèse consistant (a) à faire subir à une suspension de silice précipitée présentant un pH d'au plus 8, un traitement avec un sel organique ou inorganique d'un élément métallique au moins divalent, (b) puis, à l'issue de ce traitement, à remonter le pH du milieu réactionnel à une valeur supérieure ou égale à 3,5, (c) à séparer ensuite la silice dudit milieu, et (d) à enfin sécher la silice précipitée obtenue.

30. Utilisation d'une silice précipitée selon la revendication 29, caractérisée en ce que ledit nombre de sites cationiques est d'au moins 0,1 microMole/m$^2$.

31. Utilisation d'une silice précipitée selon la revendication 30, caractérisée en ce que ledit nombre de sites cationiques est compris entre 0,2 et 60 microMole/m$^2$.

32. Utilisation d'une suspension de silice précipitée telle que définie à l'une quelconque des revendications 25 à 27, comme bain de couchage pour papier.

**Patentansprüche**

**Patentansprüche für folgende Vertragsstaaten : AT, CH, DE, FR, GB, IT, LI, NL, SE**

1. Gefällte Kieselerde (Siliciumdioxid), dadurch gekennzeichnet, daß sie eine Oberflächenchemie mit einer in µmol/m$^2$ Kieselerde ausgedrückten Anzahl von kationischen Zentren von über 0,05 besitzt und daß sie mindestens ein zumindest zweiwertiges Metallelement enthält, das an ihre Oberfläche chemisch gebunden ist und ausgewählt ist aus der Gruppe von Erdalkalimetallen, Titan, Zirkonium und Aluminium.

2. Gefällte Kieselerde nach Anspruch 1, dadurch gekennzeichnet, daß das Metallelement Aluminium ist.

3. Gefällte Kieselerde nach Anspruch 1 oder 2, dadurch gekennzeichnet, daß die Anzahl der kationischen Zentren wenigstens 0,1 µmol/m$^2$ beträgt.

4. Gefällte Kieselerde nach Anspruch 3, dadurch gekennzeichnet, daß die Anzahl der kationischen Zentren im Bereich von 0,2 bis 60 µmol/m$^2$ liegt.

5. Gefällte Kieselerde nach einem der vorhergehenden Ansprüche, dadurch gekennzeichnet, daß ihr Neutralpunkt (NP) im Bereich von 2 bis 9 liegt.

6. Gefällte Kieselerde nach Anspruch 5, dadurch gekennzeichnet, daß der Neutralpunkt im Bereich von 3 bis 7 liegt.

7. Gefällte Kieselerde nach einem der vorhergehenden Ansprüche, dadurch gekennzeichnet, daß die in µmol/m$^2$ Kieselerde berechnete Anzahl der anionischen Zentren im Bereich von 5 bis 120 liegt.

8. Gefällte Kieselerde nach Anspruch 7, dadurch gekennzeichnet, daß die Anzahl der anionischen Zentren im Bereich von 10 bis 60 µmol/m$^2$ liegt.

9. Gefällte Kieselerde nach einem der vorhergehenden Ansprüche, dadurch gekennzeichnet, daß das Verhältnis [Anzahl der kationischen Zentren]/[Anzahl der kationischen Zentren + Anzahl der anionischen Zentren] im Bereich von 0,1 bis 0,6 und insbesondere von 0,1 bis 0,4 liegt.

10. Gefällte Kieselerde nach einem der vorhergehenden Ansprüche, dadurch gekennzeichnet, daß sie eine spezifische Oberfläche BET im Bereich von 10 bis 300 m$^2$/g besitzt.

EP 0 493 263 B2

11. Gefällte Kieselerde nach Anspruch 10, dadurch gekennzeichnet, daß die BET-Oberfläche im Bereich von 60 bis 200 m$^2$/g liegt.

12. Gefällte Kieselerde nach einem der vorhergehenden Ansprüche, dadurch gekennzeichnet, daß sie eine Ölzahl DBP im Bereich von 80 bis 500 cm$^3$/100 g besitzt.

13. Gefällte Kieselerde nach Anspruch 12, dadurch gekennzeichnet, daß die Ölzahl im Bereich von 100 bis 400 cm3/100 g liegt.

14. Gefällte Kieselerde nach einem der vorhergehenden Ansprüche, dadurch gekennzeichnet, daß sie ein Porenvolumen im Bereich von 1 bis 10 cm$^3$/g besitzt.

15. Gefällte Kieselerde nach Anspruch 14, dadurch gekennzeichnet, daß das Porenvolumen im Bereich von 2 bis 5 cm$^3$/g liegt.

16. Gefällte Kieselerde nach einem der vorhergehenden Ansprüche, dadurch gekennzeichnet, daß der Gehalt an metallischem Element zwischen 0,01 und 30 Gew.-% liegt.

17. Gefällte Kieselerde nach Anspruch 16, dadurch gekennzeichnet, daß der Gehalt im Bereich von 0,01 bis 30 Gew.% liegt.

18. Verfahren zur Synthese von gefällter Kieselerde nach einem der vorhergehenden Ansprüche, dadurch gekennzeichnet, daß es folgendes beinhaltet: (a) die Behandlung einer gefällten Kieselerdesuspension mit einem pH-Wert von über 8 mit einem organischen oder anorganischen Salz eines mindestens zweiwertigen, zuvor genannten metallischen Elements, (b) anschließend nach dieser Behandlung die Wiedereinstellung des pH-Wert des Reaktionsmediums auf einen Wert von über oder gleich 3,5, (c) danach die Abtrennung der gefällten Kieselerde vom Medium und (d) schließlich die Trocknung der gewonnenen gefällten Kieselerde.

19. Verfahren nach Anspruch 18, dadurch gekennzeichnet, daß die gefällte Kieselerdesuspension durch Suspendieren eines vorher synthetisierten Kieselerdepulvers erhalten ist.

20. Verfahren nach Anspruch 18, dadurch gekennzeichnet, daß die Suspension von gefällter Kieselerde durch Fragmentierung eines durch eine Fällungsreaktion von Kieselerde gewonnenen Filterkuchens erhalten ist.

21. Verfahren nach Anspruch 18, dadurch gekennzeichnet, daß die gefällte Kieselerdesuspension eine direkt anschließend an eine Fällungsreaktion der Kieselerde gewonnene Suspension ist.

22. Verfahren nach einem der Ansprüche 18 bis 21, dadurch gekennzeichnet, daß das organische Salz ausgewählt ist aus den Salzen von Carbon- und Polycarbonsäuren und das anorganische Salz ausgewählt ist aus Halogeniden, Oxyhalogeniden, Nitraten, Phosphaten, Sulfaten und Oxysulfaten.

23. Verfahren nach einem der Ansprüche 18 bis 22, dadurch gekennzeichnet, daß das wenigstens zweiwertige metallische Element Aluminium ist.

24. Verfahren nach einem der Ansprüche 18 bis 23, dadurch gekennzeichnet, daß die Behandlung bei einer Temperatur im Bereich von Umgebungstemperatur bis 100 °C, vorzugsweise bei einer Temperatur im Bereich von 60 bis 80 °C, durchgeführt wird.

25. Verfahren nach einem der Ansprüche 18 bis 24, dadurch gekennzeichnet, daß nach Schritt (b) eine Alterung des Reaktionsmediums vorgenommen wird.

26. Verfahren nach einem der Ansprüche 18 bis 25, dadurch gekennzeichnet, daß nach Schritt (b), gegebenenfalls gefolgt von einer Alterung, der pH-Wert des Reaktionsmediums eingestellt wird, um den pH-Wert des gefällten Kieselerde-Endprodukts festzusetzen.

27. Gefällte Kieselerde, erhältlich durch ein Verfahren nach einem der Ansprüche 18 bis 26.

28. Suspension gefällter Kieselerde, dadurch gekennzeichnet, daß sie gefällte Kieselerde nach einem der Ansprüche 1 bis 17 und 27 umfaßt.

29. Suspension gefällter Kieselerde, erhalten nach Verwendung des Schrittes (b) und vor Verwendung des Schrittes (c) eines Verfahrens nach einem der Ansprüche 18 bis 26.

30. Suspension gefällter Kieselerde, erhalten nach Verwendung des Schrittes (c) und vor Verwendung des Schrittes (d) eines Verfahrens nach einem der Ansprüche 18 bis 26.

31. Verwendung von gefällter Kieselerde nach einem der Ansprüche 1 bis 17 und 27 als Inhaltsstoff für Papier.

32. Verwendung einer gefällten Kieselerde als Inhaltsstoff für Papier, dadurch gekennzeichnet, daß sie eine Oberflächenchemie mit einer in $\mu mol/m^2$ Kieselerde berechneten Anzahl von kationischen Zentren von mehr als 0,05 aufweist.

33. Verwendung einer gefällten Kieselerde nach Anspruch 32, dadurch gekennzeichnet, daß die Anzahl der kationischen Zentren mindestens 0,1 $\mu mol/m^2$ beträgt.

34. Verwendung einer gefällten Kieselerde nach Anspruch 33, dadurch gekennzeichnet, daß die Anzahl der kationischen Zentren zwischen 0,2 und 60 $\mu mol/m^2$ beträgt.

35. Verwendung einer Suspension von gefällter Kieselerde nach einem der Ansprüche 28 bis 30 als Beschichtungsbad für Papier.

**Patentansprüche für folgenden Vertragsstaat : ES**

1. Verfahren zur Synthese von gefällter Kieselerde (Siliciumdioxid), die eine Oberflächenchemie mit einer in $\mu mol/m^2$ Kieselerde ausgedrückten Anzahl von kationischen Zentren von über 0,05 besitzt und mindestens ein zumindest zweiwertiges Metallelement enthält, das an seiner Oberfläche chemisch gebunden ist und ausgewählt ist aus der Gruppe von Erdalkalimetallen, Titan, Zirkonium und Aluminium, dadurch gekennzeichnet, daß es folgendes aufweist: (a) die Behandlung einer Suspension gefällter Kieselerde mit einem pH-Wert von über 8 mit einem organischen oder anorganischen Salz eines mindestens zweiwertigen metallischen Elements, (b) nach dieser Behandlung die Wiedereinstellung des pH-Wert des Reaktionsmediums auf einen Wert von über oder gleich 3,5, (c) danach die Trennung der gefällten Kieselerde vom Medium und (d) schließlich die Trocknung der erhaltenen gefällten Kieselerde.

2. Verfahren nach Anspruch 1, dadurch gekennzeichnet, daß das Metallelement Aluminium ist.

3. Verfahren nach Anspruch 1 oder 2, dadurch gekennzeichnet, daß die Anzahl der kationischen Zentren wenigstens 0,1 $\mu mol/m^2$ beträgt.

4. Verfahren nach Anspruch 3, dadurch gekennzeichnet, daß die Anzahl der kationischen Zentren im Bereich von 0,2 bis 60 $\mu mol/m^2$ liegt.

5. Verfahren nach einem der vorhergehenden Ansprüche, dadurch gekennzeichnet, daß die gefällte Kieselerde einen Neutralpunkt (NP) im Bereich von 2 bis 9 besitzt.

6. Verfahren nach Anspruch 5, dadurch gekennzeichnet, daß der Neutralpunkt im Bereich von 3 bis 7 liegt.

7. Verfahren nach einem der vorhergehenden Ansprüche, dadurch gekennzeichnet, daß die gefällte Kieselerde eine Anzahl an anionischen Zentren im Bereich von 5 bis 120 aufweist, berechnet in $\mu mol/m^2$ gefällte Kieselerde.

8. Verfahren nach Anspruch 7, dadurch gekennzeichnet, daß die Anzahl der anionischen Zentren im Bereich von 10 bis 60 $\mu mol/m^2$ liegt.

9. Verfahren nach einem der vorhergehenden Ansprüche, dadurch gekennzeichnet, daß die gefällte Kieselerde ein Verhältnis [Anzahl der kationischen Zentren]/[Anzahl der kationischen Zentren + Anzahl der anionischen Zentren] im Bereich von 0,1 bis 0,6 und insbesondere von 0,1 bis 0,4 liegt.

**EP 0 493 263 B2**

10. Verfahren nach einem der vorhergehenden Ansprüche, dadurch gekennzeichnet, daß die gefällte Kieselerde eine spezifische Oberfläche BET im Bereich von 10 bis 300 m$^2$/g besitzt.

11. Verfahren nach Anspruch 10, dadurch gekennzeichnet, daß die BET-Oberfläche im Bereich von 60 bis 200 m$^2$/g liegt.

12. Verfahren nach einem der vorhergehenden Ansprüche, dadurch gekennzeichnet, daß die gefällte Kieselerde eine Ölzahl DBP im Bereich von 80 bis 500 cm$^3$/100 g besitzt.

13. Verfahren nach Anspruch 12, dadurch gekennzeichnet, daß die Ölzahl im Bereich von 100 bis 400 cm$^3$/100 g liegt.

14. Verfahren nach einem der vorhergehenden Ansprüche, dadurch gekennzeichnet, daß die gefällte Kieselerde ein Porenvolumen im Bereich von 1 bis 10 cm$^3$/g besitzt.

15. Verfahren nach Anspruch 14, dadurch gekennzeichnet, daß das Porenvolumen im Bereich von 2 bis 5 cm$^3$/g liegt.

16. Verfahren nach einem der vorhergehenden Ansprüche, dadurch gekennzeichnet, daß der Gehalt des metallischen Elements im Bereich von 0,01 bis 30 Gew.% liegt.

17. Verfahren nach Anspruch 16, dadurch gekennzeichnet, daß der Gehalt im Bereich von 0,5 bis 5 Gew.% liegt.

18. Verfahren nach einem der Ansprüche 1 bis 17, dadurch gekennzeichnet, daß die gefällte Kieselerdesuspension durch Suspendieren eines vorher synthetisierten Kieselerdepulvers erhalten wird.

19. Verfahren nach einem der Ansprüche 1 bis 17, dadurch gekennzeichnet, daß die gefällte Kieselerdesuspension durch Fragmentierung eines durch eine Fällungsreaktion von Kieselerde gewonnenen Filterkuchens erhalten ist.

20. Verfahren nach einem der Ansprüche 1 bis 17, dadurch gekennzeichnet, daß die gefällte Kieselerdesuspension eine direkt anschließend an eine Fällungsreaktion der Kieselerde gewonnene Suspension ist.

21. Verfahren nach einem der Ansprüche 1 bis 21, dadurch gekennzeichnet, daß das organische Salz ausgewählt ist aus den Salzen von Carbon- und Polycarbonsäuren und das anorganische Salz ausgewählt ist aus Halogeniden, Oxyhalogeniden, Nitraten, Phosphaten, Sulfaten und Oxysulfaten.

22. Verfahren nach einem der Ansprüche 1 bis 21, dadurch gekennzeichnet, daß die Behandlung bei einer Temperatur im Bereich von Umgebungstemperatur bis 100 °C, vorzugsweise bei einer Temperatur im Bereich von 60 bis 80 °C, durchgeführt wird.

23. Verfahren nach einem der Ansprüche 1 bis 22, dadurch gekennzeichnet, daß nach Schritt (b) eine Alterung des Reaktionsmediums vorgenommen wird.

24. Verfahren nach einem der Ansprüche 1 bis 23, dadurch gekennzeichnet, daß nach Schritt (b), gegebenenfalls gefolgt von einer Alterung, der pH-Wert des Reaktionsmediums eingestellt wird, um den pH-Wert des gefällten Kieselerde-Endproduktes festzusetzen.

25. Suspension von gefällter Kieselerde, dadurch gekennzeichnet, daß sie eine gefällte Kieselerde umfaßt, die mit einem Verfahren nach einem der Ansprüche 1 bis 24 erhalten ist.

26. Suspension von gefällter Kieselerde, erhalten nach Verwendung des Schrittes (b) und vor Verwendung des Schrittes (c) eines Verfahrens nach einem der Ansprüche 1 bis 24.

27. Suspension von gefällter Kieselerde, erhalten nach Verwendung des Schrittes (c) und vor Verwendung des Schrittes (d) eines Verfahrens nach einem der Ansprüche 1 bis 24.

28. Verwendung von gefällter Kieselerde, erhalten mit einem Verfahren nach einem der Ansprüche 1 bis 24, als Inhaltsstoff für Papier.

29. Verwendung von gefällter Kieselsäure als Inhaltsstoff für Papier, wobei die Kieselerde eine Oberflächenchemie

mit einer in μmol/m$^2$ Kieselerde berechneten Anzahl von kationischen Zentren von mehr als 0,05 besitzt, dadurch gekennzeichnet, daß die gefällte Kieselerde erhältlich ist mittels eines Syntheseverfahrens, bei dem man (a) eine Suspension gefällter Kieselerde mit einem pH-Wert von mehr als 8 einer Behandlung mit einem organischen oder anorganischen Salz eines mindestens zweiwertigen Metallelements unterwirft, (b) man anschließend nach dieser Behandlung den pH-Wert des Reaktionsmilieus auf einen Wert von mehr als oder gleich 3,5 bringt, (c) man anschließend die Kieselerde vom Reaktionsmilieu abtrennt und (d) man schließlich die gewonnene gefällte Kieselerde trocknet.

30. Verwendung einer gefällten Kieselerde nach Anspruch 29, dadurch gekennzeichnet, daß die Anzahl der kationischen Zentren mindestens 0,1 μmol/m$^2$ beträgt.

31. Verwendung einer gefällten Kieselerde nach Anspruch 30, dadurch gekennzeichnet, daß die Anzahl der kationischen Zentren im Bereich von 0,2 bis 60 μmol/m$^2$ liegt.

32. Verwendung einer Suspension gefällter Kieselerde nach einem der Ansprüche 25 bis 27 als Beschichtungsbad für Papier.

## Claims

### Claims for the following Contracting States : AT, CH, DE, FR, GB, IT, LI, NL, SE

1. Precipitated silica characterized in that it exhibits a surface chemistry such that its number of cationic sites, expressed in micromoles/m$^2$ of silica, is higher than 0.05 and in that it contains at least one at least divalent metallic element bonded chemically to its surface, chosen from the group comprising alkaline-earth metals, titanium, zirconium and aluminium.

2. Precipitated silica according to Claim 1, characterized in that the said metallic element is aluminium.

3. Precipitated silica according to Claim 1 or 2, characterized in that the said number of cationic sites is at least 0.1 micromole/m$^2$.

4. Precipitated silica according to Claim 3, characterized in that the said number of cationic sites is between 0.2 and 60 micromoles/m$^2$.

5. Precipitated silica according to any one of the preceding claims, characterized in that its point of zero charge (PZC) is between 2 and 9.

6. Precipitated silica according to Claim 5, characterized in that the said point of zero charge is between 3 and 7.

7. Precipitated silica according to any one of the preceding claims, characterized in that the number of anionic sites, expressed in micromoles/m$^2$ of silica, is between 5 and 120.

8. Precipitated silica according to Claim 7, characterized in that the said number of anionic sites is between 10 and 60 micromoles/m$^2$.

9. Precipitated silica according to any one of the preceding claims, characterized in that the ratio (number of cationic sites)/(number of cationic sites + number of anionic sites) is between 0.1 and 0.6 and more particularly between 0.1 and 0.4.

10. Precipitated silica according to any one of the preceding claims, characterized in that it has a BET specific surface of between 10 and 300 m$^2$/g.

11. Precipitated silica according to Claim 10, characterized in that the said BET surface is between 60 and 200 m$^2$/g.

12. Precipitated silica according to any one of the preceding claims, characterized in that it has a DBP oil uptake of between 80 and 500 cm$^3$/100 g.

13. Precipitated silica according to Claim 12, characterized in that the said oil uptake is between 100 and 400 cm$^3$/100 g.

14. Precipitated silica according to any one of the preceding claims, characterized in that it has a pore volume of between 1 and 10 cm$^3$/g.

15. Precipitated silica according to Claim 14, characterized in that the said pore volume is between 2 and 5 cm$^3$/g.

16. Precipitated silica according to any one of the preceding claims, characterized in that the content of metallic element is between 0.01 and 30 % by weight.

17. Precipitated silica according to Claim 16, characterized in that the said content is between 0.5 and 5 % by weight.

18. Process for the synthesis of a precipitated silica especially as defined in any one of the preceding claims, characterized in that it consists (a) in subjecting a precipitated silica suspension which has a pH of not more than 8 to a treatment with an organic or inorganic salt of an aforementioned at least divalent metallic element, (b) then, at the outcome of this treatment, in again raising the pH of the reaction mixture to a value higher than or equal to 3.5, (c) in then separating the precipitated silica from the said mixture, and (d) in finally drying the precipitated silica obtained.

19. Process according to Claim 18, characterized in that the said precipitated silica suspension has been obtained by suspending a presynthesized silica powder.

20. Process according to Claim 18, characterized in that the said precipitated silica suspension has been obtained by crumbling a filter cake originating from a silica precipitation reaction.

21. Process according to Claim 18, characterized in that the said precipitated silica suspension is the suspension obtained directly at the outcome of a silica precipitation reaction.

22. Process according to any one of Claims 18 to 21, characterized in that the said organic salt is chosen from the salts of carboxylic and polycarboxylic acids, and the said inorganic salt from halides, oxyhalides, nitrates, phosphates, sulphates and oxysulphates.

23. Process according to one of Claims 18 to 22, characterized in that the at least divalent metallic element is aluminium.

24. Process according to any one of Claims 18 to 23, characterized in that the said treatment is performed at a temperature between the ambient and 100°C, preferably at a temperature of between 60 and 80°C.

25. Process according to any one of Claims 18 to 24, characterized in that, at the outcome of stage (b), a maturing of the reaction mixture is carried out.

26. Process according to any one of Claims 18 to 25, characterized in that, at the outcome of stage (b) optionally followed by a maturing, an adjustment of the pH of the reaction mixture is performed so as to fix the pH of the finished precipitated silica.

27. Precipitated silica capable of being obtained by a process as defined in any one of Claims 18 to 26.

28. Precipitated silica suspension characterized in that it includes a precipitated silica as defined in any one of Claims 1 to 17 and 27.

29. Precipitated silica suspension as obtained after the application of stage (b) and before the application of stage (c) of a process as defined in any one of Claims 18 to 26.

30. Precipitated silica suspension as obtained after the application of stage (c) and before the application of stage (d) of a process as defined in any one of Claims 18 to 26.

31. Use of a precipitated silica as defined in any one of Claims 1 to 17 and 27, as filler for paper.

**32.** Use of a precipitated silica as filler for paper, characterized in that it exhibits surface chemistry such that its number of cationic sites, expressed in micromoles/m$^2$ of silica, is higher than 0.05.

**33.** Use of a precipitated silica according to Claim 32, characterized in that the said number of cationic sites is at least 0.1 micromol/m$^2$.

**34.** Use of a precipitated silica according to Claim 33, characterized in that the said number of cationic sites is between 0.2 and 60 micromol/m$^2$.

**35.** Use of a precipitated silica suspension as defined in any one of Claims 28 to 30 as coating bath for paper.

**Claims for the following Contracting State : ES**

**1.** Process for the synthesis of a precipitated silica exhibiting a surface chemistry such that its number of cationic sites, expressed in micromoles/m$^2$ of silica, is higher than 0.05, and containing at least one at least divalent metallic element bonded chemically to its surface, chosen from the group comprising alkaline-earth metals, titanium, zirconium and aluminium, characterized in that it consists (a) in subjecting a precipitated silica suspension which has a pH of not more than 8 to a treatment with an organic or inorganic salt of an at least divalent metallic element, (b) then, at the outcome of this treatment, in again raising the pH of the reaction mixture to a value higher than or equal to 3.5, (c) in then separating the precipitated silica from the said mixture, and (d) in finally drying the precipitated silica obtained.

**2.** Process according to Claim 1, characterized in that the said metallic element is aluminium.

**3.** Process according to Claim 1 or 2, characterized in that the said number of cationic sites is at least 0.1 micromole/m$^2$.

**4.** Process according to Claim 3, characterized in that the said number of cationic sites is between 0.2 and 60 micromoles/m$^2$.

**5.** Process according to any one of the preceding claims, characterized in that the said precipitated silica exhibits a point of zero charge'(PZC) of between 2 and 9.

**6.** Process according to Claim 5, characterized in that the said point of zero charge is between 3 and 7.

**7.** Process according to any one of the preceding claims, characterized in that the said precipitated silica exhibits a number of anionic sites, expressed in micromoles/m$^2$ of precipitated silica, of between 5 and 120.

**8.** Process according to Claim 7, characterized in that the said number of anionic sites is between 10 and 60 micromoles/m$^2$.

**9.** Process according to any one of the preceding claims, characterized in that the said precipitated silica exhibits a ratio (number of cationic sites)/(number of cationic sites + number of anionic sites) of between 0.1 and 0.6 and more particularly between 0.1 and 0.4.

**10.** Process according to any one of the preceding claims, characterized in that the said precipitated silica has a BET specific surface of between 10 and 300 m$^2$/g.

**11.** Process according to Claim 10, characterized in that the said BET surface is between 60 and 200 m$^2$/g.

**12.** Process according to any one of the preceding claims, characterized in that the said precipitated silica has a DBP oil uptake of between 80 and 500 cm$^3$/100 g.

**13.** Process according to Claim 12, characterized in that the said oil uptake is between 100 and 400 cm$^3$/100 g.

**14.** Process according to any one of the preceding claims, characterized in that the said precipitated silica has a pore volume of between 1 and 10 cm$^3$/g.

**15.** Process according to Claim 14, characterized in that the said pore volume is between 2 and 5 cm$^3$/g.

**16.** Process according to one of the preceding claims, characterized in that the content of metallic element is between 0.01 and 30 % by weight.

**17.** Process according to Claim 16, characterized in that the said content is between 0.5 and 5 % by weight.

**18.** Process according to one of Claims 1 to 17, characterized in that the said precipitated silica suspension has been obtained by suspending a presynthesized silica powder.

**19.** Process according to one of Claims 1 to 17, characterized in that the said precipitated silica suspension has been obtained by crumbling a filter cake originating from a silica precipitation reaction.

**20.** Process according to one of Claims 1 to 17, characterized in that the said precipitated silica suspension is the suspension obtained directly at the outcome of a silica precipitation reaction.

**21.** Process according to any one of Claims l to 21, characterized in that the said organic salt is chosen from the salts of carboxylic and polycarboxylic acids, and the said inorganic salt from halides, oxyhalides, nitrates, phosphates, sulphates and oxysulphates.

**22.** Process according to any one of Claims 1 to 21, characterized in that the said treatment is performed at a temperature between the ambient and 100°C, preferably at a temperature of between 60 and 80°C.

**23.** Process according to any one of Claims 1 to 22, characterized in that, at the outcome of stage (b), a maturing of the reaction mixture is carried out.

**24.** Process according to any one of Claims 1 to 23, characterized in that, at the outcome of stage (b) optionally followed by a maturing, an adjustment of the pH of the reaction mixture is performed so as to fix the pH of the finished precipitated silica.

**25.** Precipitated silica suspension characterized in that it includes a precipitated silica obtained by a process as defined in any one of Claims 1 to 24.

**26.** Precipitated silica suspension as obtained after the application of stage (b) and before the application of stage (c) of a process as defined in any one of Claims 1 to 24.

**27.** Precipitated silica suspension as obtained after the application of stage (c) and before the application of stage (d) of a process as defined in any one of Claims 1 to 24.

**28.** Use of a precipitated silica obtained by a process as defined in any one of Claims 1 to 24, as filler for paper.

**29.** Use of a precipitated silica as filler for paper, exhibiting surface chemistry such that its number of cationic sites, expressed in micromoles/m$^2$ of silica, is higher than 0.05, characterized in that the precipitated silica is capable of being obtained by a synthetic process consisting (a) in subjecting a precipitated silica suspension which has a pH of not more than 8 to a treatment with an organic or inorganic salt of an at least divalent metallic element, (b) then, at the outcome of this treatment, in again raising the pH of the reaction mixture to a value higher than or equal to 3.5, (c) in then separating the silica from the said mixture, and (d) in finally drying the precipitated silica obtained.

**30.** Use of a precipitated silica according to Claim 29, characterized in that the said number of cationic sites is at least 0.1 micromol/m$^2$.

**31.** Use of a precipitated silica according to Claim 30, characterized in that the said number of cationic sites is between 0.2 and 60 micromol/m$^2$.

**32.** Use of a precipitated silica suspension as defined in any one of Claims 25 to 27 as coating bath for paper.